# EUROPÄISCHE PATENTSCHRIFT

(11) **EP 4 544 358 B1**
(45) Veröffentlichungstag und Bekanntmachung des Hinweises auf die Patenterteilung: **07.10.2026**
(21) Anmeldenummer: 23733963.5
(22) Anmeldetag: 20.06.2023
(51) Int. Cl.: G03H 1/20, G03H 1/04, G03H 1/02

(54) **REPLIKATIONSVERFAHREN MIT EINEM KONTAKTKÖRPER**
REPLICATION METHOD WITH A CONTACT BODY
PROCÉDÉ DE RÉPLICATION AVEC UN CORPS DE CONTACT

(30) Priorität: 22.06.2022 DE 102022115595
(43) Veröffentlichungstag der Anmeldung: 30.04.2025
(73) Patentinhaber: Carl Zeiss Jena GmbH, 07745 Jena (DE)
(72) Erfinder: SCHWEDAT, Stefan, 07745 Jena (DE); VOJTISEK, Petr, 07745 Jena (DE); HARTMANN, Annett, 07745 Jena (DE); RIETHMUELLER, Mirko, 07745 Jena (DE); JAKUBZICK, Alexander, 07745 Jena (DE)
(74) Vertreter: Leifgen, Matthias
(86) Internationale Anmeldenummer: PCT/EP2023/066662
(87) Internationale Veröffentlichungsnummer: WO 2023/247555

(56) Entgegenhaltungen:
- US-A1- 2018 188 690
- US-A1- 2019 011 880

## Beschreibung

Die Erfindung betrifft in einem Aspekt ein Replikationsverfahren für eine Herstellung einer Hologrammkopie durch eine gleichzeitige Belichtung eines Masterhologramms und eines Kopieträgers, welcher ein photosensitives Material umfasst. Der Kontaktkörper wird während der Belichtung mit dem Kopieträger in Kontakt gebracht, wobei sich der Kontaktkörper und der Kopieträger in einem von einem Belichtungslicht durchstrahlten Teil während der Belichtung direkt berühren. Der Kontaktkörper ist transparent für das Belichtungslicht und der Brechungsindex des Kontaktkörpers ist an den Brechungsindex des Kopieträgers angepasst.

In einem weiteren Aspekt betrifft die Erfindung eine Vorrichtung zur Realisierung des Replikationsverfahrens.

### Hintergrund und Stand der Technik

Bei der Holografie werden im Gegensatz zu gewöhnlichen Abbildungen, bspw. der Fotografie, neben der Intensität vom abgebildeten Objekt zusätzlich Phasenbeziehungen des vom Objekt kommenden Lichtes abgespeichert. Diese Phasenbeziehungen enthalten zusätzliche räumliche Informationen, wodurch bspw. ein dreidimensionaler Eindruck der Abbildung erzeugt werden kann und/oder eine sehr flexible Strahlformung bzw. Strahlumlenkung realisiert werden kann. Dies geschieht mit Hilfe von Interferenz von Lichtstrahlen während der Aufnahme des Objekts. Das Objekt wird mit kohärentem Licht beleuchtet und das Licht wird vom Objekt reflektiert und gestreut. Das entstandene Wellenfeld, die sogenannte Objektwelle, wird mit zu der Objektwelle kohärentem Licht (die sogenannte Referenzwelle - typischerweise von derselben Lichtquelle, z. B. einem Laser) überlagert und die Wellenfelder interferieren als Funktion ihrer Phasenbeziehung miteinander. Das entstehende Interferenzmuster wird bspw. mittels einer lichtempfindlichen Schicht aufgenommen und somit wird auch die in der Phase enthaltene Information gespeichert. Zur Rekonstruktion beleuchtet man das entstandene Hologramm mit einer zur Referenzwelle identischen bzw. ähnlichen Lichtwelle, welche sodann durch die aufgezeichneten Interferenzmuster gebeugt wird. So kann die ursprüngliche Wellenfront der Objektwelle rekonstruiert werden. Es gibt verschiedene Typen von Hologrammen, z. B. Transmissions- und Reflexionshologramme, die diese Rekonstruktion jeweils entweder in Transmission oder in Reflektion erzeugen. Befindet man sich z. B. bei einem Transmissionshologramm auf einer der Lichtquelle gegenüberliegenden Seite des Hologramms und betrachtet dieses, erscheint das abgebildete Objekt dreidimensional vor einem.

Hologramme können neben der dreidimensionalen Darstellung in Form sogenannter Holografisch-optische Bauelemente (HOE) verwendet werden, deren holografische Eigenschaften für die Optik von Geräten verwendet werden kann. Beispielsweise lassen sich durch HOE herkömmliche Linsen, Spiegel und Prismen ersetzen. In anderen Fällen werden HOEs als spezielle Diffraktionsgitter verwendet. HOEs weisen zum Beispiel eine spektrale Selektivität und/oder eine Selektivität in Bezug auf den Einfallswinkel auf. Gleichzeitig können sie für andere Spektralbereiche und/oder Einfallswinkel vollkommen oder teilweise transparent sein.

Hologramme, insbesondere technische Hologramme, können durch diverse holografische Verfahren direkt aufgenommen oder mit Hilfe von Wellenfrontdruckern bzw.

Stereoholographiedruckern aus computergenerierten Daten gedruckt werden. Für eine Massenfertigung optischer Funktionen in Form von Hologrammen eignen sich diese Herstellungsverfahren, wegen des hohen Zeitaufwandes jedoch nicht. Hierfür bieten sich geeignete Replikationsverfahren an.

Ein wichtiges Replikationsverfahren für Hologramme entspricht dem technisch bekannten Verfahren von Kontaktkopien. Dabei wird direkt auf das so genannte Masterhologramm ein photosensitives Material aufgebracht. Durch gleichzeitiges Belichten des photosensitiven Materials und des Masterhologramms mit ausreichend kohärentem Licht wird die optische Funktion des Masters in Form eines Hologramms in das photosensitive Material übertragen, wodurch eine Kopie des Masterhologramms erzeugt wird.

Das Masterhologramm umfasst in geeigneter Weise die zu replizierenden optischen Eigenschaften. Bspw. beinhaltet das Masterhologramm das Hologramm, welches kopiert werden soll und stellt somit vorzugsweise das "Original" dar, welches im Replikationsprozess kopiert werden soll.

Das photosensitive Material ist vorzugsweise von einem Kopieträger umfasst. Der Kopieträger stellt insbesondere eine physische Manifestation dar, die das Handling des photosensitiven Materials erleichtert und z. B. zusätzliche Stabilität und/oder Schutz für dieses Material darstellt. Je nach verwendetem Material und Verfahren kann der Kopieträger aber auch aus dem photosensitiven Material bestehen, wenn dieses für sich genommen stabil und/oder robust genug ist und/oder das Verfahren einen geeigneten, insbesondere einen schonenden Umgang mit dem photosensitiven Material ermöglicht.

Das photosensitive Material ist vorzugsweise auf einem Trägermaterial aufgebracht, wobei photosensitives Material und Trägermaterial gemeinsam vom Kopieträger umfasst sind. Der Kopieträger kann jedoch in seiner einfachsten Form lediglich das photosensitive Material selbst enthalten.

Um Replikationsprozess serientauglich zu gestalten, muss auch das Masterhologramm gegen mechanische Einflüsse geschützt werden. Dies ist am Einfachsten zu erreichen, wenn das Masterhologramm zwischen Glasplatten (Quarzglas, Floatglas, Natriumsilikatglas oder ähnlichem) eingebettet wird. Die optische Eigenschaften der durch das Kopieren erzeugten Hologramme ist dabei wesentlichen vom Abstand (der Länge des optischen Wegs) zwischen Masterhologramm und dem photosensitiven Material abhängig, je kleiner der Abstand, umso genauer wird die optische Funktion des Masterhologramms kopiert. Sowohl bei der Herstellung von Masterhologrammen als auch bei der Herstellung entsprechender Kopien, kann es erforderlich sein zwischen den Komponenten der Belichtungsapparaturen einen so genannten optischen Kontakt herzustellen. Das bedeutet beispielsweise, dass das Licht beim Übertritt von einem optischen Medium in ein anderes optisches Medium einen möglichst geringen Sprung im Brechungsindex überwinden muss (in der Regel < 0,1). Dadurch werden vorteilhafterweise unerwünschte Reflexionen von notwendigen Lichtstrahlen an bestimmten Grenzflächen unterdrückt bzw. minimiert (z. B. Fresnel-Reflexionen) und es können bevorzugt Lichtstrahlen mit ausreichend großen Winkeln in ein optisch dichteres Medium eingekoppelt werden, wodurch dieses anschließend durch Totalreflexion in diesem Medium geführt werden kann. Dies ist bei einigen Belichtungsprozessen vorteilhaft.

Ein bekanntes Verfahren beruht auf dem sogenannten Indexmatching mittels Flüssigkeit (Glyzerin, Zimtöl, Ethanol, Wasser u. s. w.). Dabei werden die wesentlichen Komponenten bei der Belichtung in einem Flüssigkeitsbad mit einer Brechungsindex-angepassten Flüssigkeit angeordnet. Dies hat den Nachteil, dass die Flüssigfilme sehr lange (Minuten bis Stunden) in Bewegung bleiben (Größenordnung 10 nm/sek), wodurch das durchstrahlende Licht in seiner Phase moduliert wird. Dies führt dazu, dass im Interferenzfeld (dort wo das Hologramm aufgenommen wird) kein zeitlich bzw. örtlich stabiles Wellenfeld (Interferenz Muster) entsteht, was für den Belichtungszeitraum der Hologramme jedoch zwingend erforderlich ist. Dies macht die Hologrammaufnahme entsprechend dieser Technik langwierig oder verschlechtert deren Qualität. Für die Vervielfältigung von Hologrammen ist der Umgang mit flüssigen Indexmatch-Liquids ebenfalls ungünstig, da die Flüssigkeiten nach den Belichtungsprozessen aufwändig entfernt werden müssen ohne, dass Rückstände oder Putzspuren zurückbleiben.

Das klassische Indexmatching, wobei Festköperteile mit angepasstem Brechungsindex um die wesentlichen Komponenten mittels Klebstoff und Kitten angeordnet werden, hat den Nachteil, dass das Wiederlösen fest verkitteter Baugruppen nur mit hohem mechanischen bzw. thermischen Aufwand oder unter Einsatz geeigneter Lösemittel möglich ist. Auf diese Weise sind Schäden an den Hologrammen oder deren Kopien kaum zu vermeiden, da diese in der Regel aus einem Kunststoff-Stack optisch transparenter Kunststoffe (Träger und Schutzfilm) mit dazwischen liegender Photopolymerschicht bestehen.

Aus dem Stand der Technik ist lediglich bekannt, eine optische Verbindung zwischen zwei transparenten Körpern, beispielsweise zwei Lichtleitern zu verbessern, indem ein Festkörper in den Verbindungsbereich zwischen den Körpern eingebracht wird, welcher die (optische) Kontaktierung verbessert. Dieser Festkörper ist typischerweise transparent und weist einen an die zu verbindenden Körper angepassten Brechungsindex auf.

US 2010/0124394 A1 schlägt ein solches Zwischenstück zwischen zwei optischen Fasern vor, welches bspw. bei einem Steckverbindungssystem zwischen zwei optischen Fasern Anwendung finden kann. Dabei soll zusätzlich ein Schmiermittel verwendet werden, um die Reibung zwischen den beteiligten Komponenten zu verhindern. Das Ziel ist die Verbesserung einer längerfristigen Verbindung zwischen den optischen Fasern.

DE 10 2007 039 630 B3 schlägt vor, einen sogenannten "Gob", welcher ein Halbzeug aus Glas ist, zwischen zwei transparenten Elementen einzuspannen und dann zu durchleuchten. Die transparenten Elemente sind verformbar, um sich an eine gemeinhin wellige und unebene Oberfläche des Gobs anzupassen und so eine automatisierte optische Prüfung des Gobs ohne störende Effekte aufgrund der Welligkeit der Oberfläche zu ermöglichen.

DE 10 2011 113 116 B3 beschreibt einen hohlen Körper, welcher mit einer Immersionsflüssigkeit gefüllt werden kann. Der Immersionskörper wird verwendet, um eine Beleuchtung und eine Probe bzw. eine Abbildungsoptik und eine Probe miteinander über den Körper zu kontaktieren. So kann die Auflösung vergrößert werden und Oberflächeneffekte können vermindert werden. Dies hat den Nachteil, dass der Druck über den durch die Immersionsflüssigkeit ausgeübten Druck reguliert werden muss und außerdem mehreren Grenzflächen jeweils zwischen Körper und kontaktiertem Element sowie innerhalb des Körpers zwischen Außenwandung und Flüssigkeit im Inneren vorhanden sind, welche die durchstrahlenden Lichtstrahlen negativ beeinflussen können.

DE 10 2011 111 545 B3 beschreibt eine Halterung für transparente Proben, z. B. Linsen, welche bspw. so klein sind, dass sie sonst zwischen Pinzetten gehalten werden müssten. Es wird eine Halterung aus Elastomer vorgeschlagen, die die Probe von zwei Seiten zwischen sich arretiert, wobei von einer dritten Seite ein Sensor die durch die Halterung beleuchtete Probe untersuchen kann. Durch die Halterung kann die Intensität der in die Probe eingekoppelten Beleuchtung erhöht werden.

US 2019/011880 A1 betrifft eine Vorrichtung zur Herstellung von Volumenreflexionshologrammen mit substratgeführtem Rekonstruktionsstrahl.

Aus dem Stand der Technik ist kein einfaches und schnelles Verfahren bekannt, welches die zeitliche und räumliche Kohärenz bei der Replikation eines Hologrammes verbessert, unerwünschte Reflektionen an Grenzfläche verhindert und neue Belichtungsmöglichkeiten schafft.

### Aufgabe der Erfindung

Es ist eine Aufgabe der Erfindung ein Replikationsverfahren für ein Hologramm und eine Belichtungsvorrichtung hierfür ohne die Nachteile des Standes der Technik bereitzustellen.

Insbesondere ist es eine Aufgabe der Erfindung, ein einfaches und schnelles Replikationsverfahren für unterschiedliche Kopieträger bereitzustellen, welches eine verbesserte Replikation eines Hologramms ermöglicht, insbesondere durch Verbesserung der zeitlichen und räumlichen Kohärenz bei der Replikation sowie der Verminderung unerwünschter Reflektionen an Grenzfläche und durch Schaffung neuer Belichtungsmöglichkeiten. Es ist weiterhin eine Aufgabe der Erfindung, eine einfache und kostengünstige Belichtungsvorrichtung für das Replikationsverfahren bereitzustellen, durch welche die genannten Vorteile bei der Replikation erzielt werden können.

### Zusammenfassung der Erfindung

Die Aufgabe wird durch die Merkmale der unabhängigen Ansprüche gelöst. Bevorzugte Ausführungsformen der Erfindung sind in den abhängigen Ansprüchen beschrieben.

Die Erfindung betrifft ein Replikationsverfahren für eine Herstellung einer Hologrammkopie durch eine gleichzeitige Belichtung eines Masterhologramms und eines Kopieträgers, welcher ein photosensitives Material umfasst, wobei ein Kontaktkörper während der Belichtung mit dem Kopieträger in Kontakt gebracht wird, wobei sich der Kontaktkörper und der Kopieträger in einem von einem Belichtungslicht durchstrahlten Teil, bevorzugt zumindest bereichsweise, während der Belichtung direkt berühren, wobei der Kontaktkörper transparent ist für das Belichtungslicht und wobei der Brechungsindex des Kontaktkörpers an den Brechungsindex des Kopieträgers angepasst ist zur Vermeidung von Reflektionen des Belichtungslichtes, vorzugsweise an Berührungsflächen des Kontaktkörpers und des Kopieträgers.

Gleichzeitige Belichtung bedeutet hierbei insbesondere, dass sowohl Masterhologramm als auch Kopieträger durch gleiche Lichtstrahlen beleuchtet werden und bspw. durch diese eine Informationsübertragung (bspw. durch Information in der Phase, der Frequenz, des Spektrums, der Polarisation, Ausbreitungsrichtung und/oder der Intensität des Lichtstrahls) zwischen Masterhologramm und Kopieträger stattfinden kann.

Belichtung bedeutet bevorzugt die Bestrahlung mit elektromagnetischer Strahlung, insbesondere mit Licht, um die Eigenschaften des photosensitiven Materials zu ändern. Eine Belichtung findet vorzugsweise in einem begrenzten Zeitraum statt. Der Zeitraum liegt bspw. im Größenordnungsbereich 10 0 Nanosekunden (ns), 1 Mikrosekunde (µs), 10 µs, 100 µs, 1 Millisekunde (ms), 10 ms, 100 ms, 1 Sekunde (s), 10 s, 1 Minute (min) und/oder 10 min.

Bevorzugt umfasst der Kopieträger nach dem Belichtungsvorgang eine holografische Kopie des Masterhologramms. Es kann jedoch bevorzugt sein, dass für die Herstellung der Kopie nach der Belichtung noch weitere Verfahrensschritte benötigt werden.

Der Kopieträger bzw. das photosensitive Material kann vorzugsweise nach Beendigung des Replikationsverfahren selbst ein Hologramm umfassen, welches ein Masterhologramm für ein späteres Replikationsverfahren darstellt.

Der Kopieträger (s. z. B. Definitionen oben in "Hintergrund und Stand der Technik"), welcher das photosensitive Material umfasst, kann eine Glasscheibe umfassen und/oder eine Folie, z. B. eine Trägerfolie, also bevorzugt eine Folie als Träger für das photosensitive Material. Das der Kopieträger das photosensitive Material umfasst bedeutet vorzugsweise in diesem Fall, dass das photosensitive Material, bspw. als Schicht oder Folie, auf die Glasscheibe oder die Trägerfolie aufgebracht vorliegt. Dabei kann der Kopieträger flächig sein und vorzugsweise eine erste und eine zweite Seite entlang der flächigen Ausdehnung aufweisen, wobei die erste Seite insbesondere eine dem Kontaktkörper zugewandte bzw. eine diesem naheliegende Seite ist und die zweite Seite eine dem Kontaktkörper abgewandte bzw. diesem ferner liegende Seite (als die erste Seite) ist. Das photosensitive Material kann auf der ersten oder der zweiten Seite vorliegen.

Grundsätzlich kann der Kopieträger ein Trägermaterial und ein auf das Trägermaterial aufgebrachtes photosensitives Material umfassen, s. o. Dabei kann der Kopieträger flächig sein und vorzugsweise eine erste und eine zweite Seite entlang der flächigen Ausdehnung aufweisen, wobei die erste Seite insbesondere eine dem Kontaktkörper zugewandte bzw. eine diesem naheliegende Seite ist und die zweite Seite eine dem Kontaktkörper abgewandte bzw. diesem ferner liegende Seite (als die erste Seite) ist. Das photosensitive Material kann auf der ersten oder der zweiten Seite vorliegen.

Ein photosensitives Material ist bevorzugt ein Material, welches beim Belichtungsprozess mit dem Belichtungslicht reagieren kann und abhängig von den Eigenschaften der auftreffenden Lichtstrahlen, also insbesondere Phase, Frequenz, Spektrum, Polarisation, Ausbreitungsrichtung und/oder der Intensität des Lichts seine optischen Eigenschaften dergestalt ändern kann, dass ein vom Belichtungslicht und insbesondere vom gleichzeitig belichteten Masterhologramm abhängiges Hologramm daraus entstehen kann, welches zumindest teilweise, vorteilhafterweise im Wesentlichen übereinstimmende optische Eigenschaften mit dem Masterhologramm aufweist.

Der Kontaktkörper weist insbesondere in einem ausreichend breiten Temperaturbereich um die Raumtemperatur herum Eigenschaften eines Festkörpers auf und ist insbesondere nicht flüssig und/oder gasförmig. Flüssig kann dabei bedeuten, dass der Kontaktkörper unter den bei der Belichtung relevanten Zeitskalen nicht fließt, also insbesondere im Wesentlichen keine Formänderung erfährt. Die Zeitskalen können im folgenden Bereich liegen: 1 Mikrosekunde (µs) oder mehr, 10 µs oder mehr, 100 µs oder mehr, 1 Millisekunde (ms) oder mehr, 10 ms oder mehr, 100 ms oder mehr, 1 Sekunde (s) oder mehr, 10 s oder mehr, 1 Minute (min) oder mehr, 10 min oder mehr, 1 Stunde (h) oder mehr, 10 h oder mehr, 1 Tag (d) oder mehr, 10 d oder mehr, 100 d oder mehr.

Der Kontaktkörper kann vorzugsweise prismenförmig und/oder flächig sein.

Begriffe wie im Wesentlichen, ungefähr, etwa, ca. etc. beschreiben bevorzugt einen Toleranzbereich von weniger als ± 20%, bevorzugt weniger als ± 10 %, noch stärker bevorzugt weniger als ± 5% und insbesondere weniger als ± 1%. Angaben von im Wesentlichen, ungefähr, etwa, ca. etc. offenbaren und umfassen stets auch den exakten genannten Wert.

Der Kontaktkörper und der Kopieträger berühren sich in einem von einem Belichtungslicht durchstrahlten Teil, bevorzugt zumindest bereichsweise, während der Belichtung direkt. Der vom Belichtungslicht durchstrahlte Teil umfasst vorzugsweise sowohl einen von Strahlen des Belichtungslichts durchstrahlten Anteil einer Grenz- bzw. Außenfläche des Kontaktkörpers als auch einen von den gleichen Strahlen des Belichtungslicht durchstrahlten Anteil einer Grenz- bzw. Außenfläche des Kopieträgers. Vorzugsweise handelt es sich bei der jeweiligen Außenfläche um die der Außenfläche des jeweils anderen Körpers (also aus Sicht des Kontaktkörpers die Außenfläche des Kopieträgers und umgekehrt) zugewandten bzw. am nächsten liegenden Außenfläche. Der Kopieträger kann in diesem Zusammenhang vorzugsweise als Körper bezeichnet werden. Eine direkte bereichsweise Berührung meint dabei bevorzugt eine Berührung von Kontaktkörper und Kopieträger in einem Bereich ohne Zwischenraum zwischen deren Außen- bzw. Grenzflächen in diesem Bereich. Ein Bereich ist vorzugsweise eine Fläche oder ein Volumen. Bereichsweise meint dabei insbesondere einen Bereich des oben beschriebenen Teils, also ein von diesem Teil umfasster Bereich. Es kann sein, dass das Belichtungslicht von einer Belichtungsanordnung zuerst den Kopieträger durchstrahlt, beispielsweise nach dem ein Masterhologramm durchstrahlt wurde und dann aus dem Kopieträger austritt. Es ist dann bevorzugt, dass an diesen Austrittsflächen der Kopieträger zumindest bereichsweise vom Kontaktkörper berührt wird. Hierdurch kann vorteilhafterweise bei einem entsprechend angepassten Brechungsindex des Kontaktkörpers (s. u.) verhindert werden, dass an der Grenzfläche des Kopieträgers und/oder des Kontaktkörpers eine Reflektion auftritt, welche bspw. erneut das photosensitive Material bestrahlen und dabei für eine unerwünschte Belichtung des photosensitiven Materials oder eine unerwünschte Beeinflussung des erwünschten Belichtungslichtes (bspw. durch Interferenz) sorgen könnte. Es kann ebenso sein, dass zumindest ein Teil des Belichtungslichtes zuerst den Kontaktkörper und dann den Kopieträger bestrahlt. Es ist dann bevorzugt, dass an den Austrittsflächen des Lichtes am Kontaktkörper zumindest bereichsweise der Kontaktkörper den Kopieträger berührt und hierdurch vorteilhafterweise erreicht werden kann, dass das Belichtungslicht im Wesentlichen ohne seine Richtung zu ändern und/oder ohne Reflektionen an der Grenzfläche des Kontaktkörpers und/oder des Kopieträgers in den Kopieträger einstrahlt und somit in definierter Weise das photosensitive Material bestrahlt.

Der Kontaktkörper ist vorzugsweise transparent für das Belichtungslicht. Transparent bedeutet in diesem Zusammenhang vorzugsweise, dass das Belichtungslicht zu mehr als 20%, mehr als 30 %, mehr als 40 %, mehr als 50 % mehr als 60 %, mehr als 70 %, mehr als 80 % oder mehr als 90 % transmittiert wird. Dabei kann auch nur ein Teil des Spektrums des Belichtungslichtes auf die genannte Weise transmittiert werden, insbesondere der spektrale Anteil des Belichtungslichtes, welcher bei der Belichtung einen wesentlichen Einfluss auf das photosensitive Material des Kopieträgers nehmen kann.

Der Brechungsindex des Kontaktkörpers ist an den Brechungsindex des Kopieträgers angepasst zur Vermeidung von Reflektionen des Belichtungslichtes an Berührungsflächen des Kontaktkörpers und des Kopieträgers.

Berührungsflächen sind vorzugsweise Flächen, an denen sich der Kontaktkörper und der Kopieträger direkt berühren. Sie sind von den Bereichen des vom Belichtungslicht durchstrahlten Teils, an denen sich Kontaktkörper und Kopieträger direkt berühren, vorzugsweise umfasst. Wird an diesen Berührungsflächen für das durchstrahlende Belichtungslicht eine Änderung des Brechungsindex erfahren, kann unter gewissen Umständen beispielsweise eine Reflektion stattfinden.

Der Brechungsindex beschreibt vorzugsweise das Verhältnis der Wellenlänge des Lichts im Vakuum zur Wellenlänge im Material, und damit gleichsam vorzugsweise das Verhältnis der Phasengeschwindigkeit des Lichts im Vakuum zu der im Material. Der Brechungsindex ist bevorzugt eine Größe mit der Dimension Zahl. Der Brechungsindex kann eine Abhängigkeit von der Frequenz bzw. Wellenlänge des Lichtes aufweisen. Es wird vorzugsweise angenommen, dass der Brechungsindex im hier relevanten spektralen Anteil (s. o. für Definition) des Beleuchtungslichtes im Wesentlichen konstant ist. Der Brechungsindex spielt insbesondere für die Beschreibung bzw. das Verhalten von Licht an Grenzflächen eine Rolle, bspw. zur Beschreibung von Reflektionen. Ein Beispiel ist das Snelliussche Brechungsgesetz n₁ sinα = n₂ sinβ, welches den Brechungswinkel β in Abhängigkeit des Einfallswinkels α und der beteiligten Brechungsindizes beschreibt, aber auch die Fresnelschen Formeln, welche den Reflexions- und Transmissionsgrad an Grenzflächen, an denen sich der Brechungsindex ändert, in Abhängigkeit von der Polarisation des einfallenden Lichtes, dessen Einfallswinkel auf die Grenzfläche und der beteiligten Brechungsindizes beschreiben.

Reflektionen bzw. Reflexionen finden vorzugsweise an Grenzflächen statt, an denen eine Änderung des Brechungsindizes stattfindet. Die Abhängigkeit der Reflexionen von den an der Grenzfläche vorliegenden Brechungsindizes kann wie vorstehend beschrieben bspw. durch das Snelliussche Brechungsgesetz und/oder die Fresnellschen Formeln beschrieben werden. Ein Fachmann weiß also, was damit gemeint ist, dass der Brechungsindex des Kontaktkörpers an den Brechungsindex des Kopieträgers angepasst ist zur Vermeidung von Reflektionen des Belichtungslichtes an Berührungsflächen des Kontaktkörpers und des Kopieträgers. Er kann abhängig von der jeweiligen Belichtungssituation eine geeignete Wahl treffen für die Anpassung des Brechungsindex des Kontaktkörpers. Wird beispielsweise das Belichtungslicht so eingestrahlt, dass die Polarisation des Belichtungslichtes im Wesentlichen parallel zur Einfallsebene ist, kann ggf. der Brechungsindex des Kontaktkörpers so gewählt werden, dass das Licht im Brewsterwinkel auf die Berührungsfläche einfällt und somit im Wesentlichen transmittiert wird. Dabei umfasst bevorzugt der Kopieträger und/oder der Kontaktkörper ein Dielektrikum. Ein einfaches Beispiel wäre eine Anpassung des Brechungsindizes des Kontaktkörpers dergestalt, dass dieser im Wesentlichen mit dem des Kopieträgers übereinstimmt.

Durch dieses Replikationsverfahren kann eine verbesserte Hologrammkopie hergestellt werden, bei der mit einfachen Mitteln störende Reflektionen an Grenz- bzw. Außenflächen des Kopieträgers verhindert werden können. Die Mittel erlauben eine schnelle und unaufwendige Replikation ohne zusätzliche Reinigungsschritte. Das Verfahren ist insbesondere einfach automatisierbar und skalierbar.

In einer bevorzugten Ausführungsform der Erfindung unterscheidet der Brechungsindex des Kontaktkörpers vom Brechungsindex des Kopieträgers um weniger als 0,2, bevorzugt um weniger als 0,05 und insbesondere um weniger als 0,01.

In einer bevorzugten Ausführungsform der Erfindung wird die bereichsweise Berührung durch eine Adhäsion zwischen Kontaktkörper und Kopieträger unterstützt wird.

Adhäsion beschreibt bevorzugt einen physikalischen Zustand einer Grenzflächenschicht, die sich zwischen zwei in Kontakt tretenden kondensierten Phasen, insbesondere Feststoffen und Flüssigkeiten mit vernachlässigbarem Dampfdruck, ausbildet. Dieser Zustand ist insbesondere gekennzeichnet durch einen mechanischen Zusammenhalt, bspw. hervorgerufen durch molekulare Wechselwirkungen in der Grenzflächenschicht aber auch durch andere diesen mechanischen Zusammenhalt bewirkenden Kräfte, welche nicht alle vollständig erforscht sind und zu denen teilweise verschiedene Adhäsionstheorien existieren. Bevorzugt kann eine Adhäsion auch als anhaften bezeichnet werden.

Eine Adhäsion bzw. ein Anhaften kann die bereichsweise Berührung wie vorstehend beschrieben unterstützen, indem diese durch das Anhaften mechanisch stabilisiert wird. Vorzugsweise kann durch die Adhäsion sogar die Berührungsfläche vergrößert werden. Es kann bspw. sein, dass Bereiche der Grenzflächen des Kontaktkörpers und des Kopieträgers an denen keine direkte Berührung stattfindet, aber die nahe genug zueinander entfernt sind, dass Adhäsionskräfte zwischen der Außenfläche des Kontaktkörpers und der des Kopieträgers wirken können, diese zueinander gezogen und in Berührung gebracht werden. Bei diesen Bereichen der Grenzflächen kann es sich um zur Berührungsfläche benachbarte Bereiche der Grenzflächen handeln.

Insbesondere kann der Kontaktkörper eine adhäsive Oberfläche aufweisen, um die Adhäsion zu unterstützen. Diese kann bspw. durch eine adhäsive Beschichtung des Kontaktkörpers realisiert werden.

Vorteilhafterweise sind die adhäsiven Eigenschaften mindestens so groß, dass ein Stickslip, Sticking, oder Rutschen des Kopieträgers auf dem Masterhologrammträger sicher verhindert wird. Insbesondere muss die Haftreibung des Kontaktkörpers größer sein als die Querkräfte, die ein Verrutschen ermöglichen würden.

Bevorzugt kann ein Rutschen oder Stickslipping durch Erhöhung der Anpresskraft des Kontaktkörpers verhindert werden.

Der Kontaktkörper befindet sich vorteilhaftweise während des Belichtungsprozesses im optischen Kontakt mit dem Kopierträger. Reicht die Adhäsion nicht aus, damit der optische Kontakt bestehen bleibt, kann bevorzugt durch Aufbringen eines Drucks nachgeholfen werden.

In einer bevorzugten Ausführungsform der Erfindung ist der Kontaktkörper elastisch und weist bevorzugt ein Elastizitätsmodul von weniger als 50 MPa, bevorzugt weniger als 20 MPa und insbesondere weniger als 5 MPa auf.

Dem Fachmann sind geeignete Messmethoden zur Vermessung des Elastizitätsmoduls bekannt. Vorzugsweise kann die Haftung (bevorzugt synonym mit Adhäsion) und/oder die Haftreibung als eine Summenwirkung aus: -wie gut "verhaken" sich die Oberflächen ineinander, - wie stark bilden sich Van-Der-Waals Kräfte aus, - wie stark unterstützt die Kraftwirkung auf den Kontaktkörper das "Ineinanderverhaken" der Kontaktflächen beschrieben werden. Diese Einflussgrößen der Haftung / Haftreibung sind vorzugsweise größer, je geringer das Elastizitätsmodul des Kontaktkörpers ist. Gleichzeitig soll sich der Kontaktkörper vorzugsweisewährend des Kontakts wie ein Festkörper verhalten. Ein bevorzugtes Stichwort ist das sogenannte viskoelastische Verhalten. Das frequenzabhängige Speichermodul soll insbesondere für Frequenzen wie sie im Prozess auftreten (bevorzugt 0,001 bis 100 Hz) im Modulbereich < 50 MPa liegen, darf dabei aber vorteilhaftweise nicht so klein werden, dass sich der Körper wie eine Flüssigkeit verhält. Somit impliziert wie vorstehend beschrieben die bevorzugte Elastizität vorteilhafterweise eine Adhäsion.

In einer bevorzugten Ausführungsform der Erfindung ist der Kontaktkörper elastisch, zumindest bereichsweise adhäsiv und/oder biegsam und, wobei Kontaktkörper und Kopieträger während der Belichtung aneinander angedrückt werden.

Ein Aneinanderdrücken beschreibt vorzugsweise ein gegenseitiges Andrücken, welches insbesondere durch eine Relativbewegung und/oder durch das Ausüben einer Relativkraft zwischen Kontaktkörper und Kopieträger realisiert werden kann.

Die Biegsamkeit ist vorzugsweise synonym mit der Elastizität. Die Elastizität kann bspw. durch ein vorstehend beschriebenes Elastizitätsmodul des Kontaktkörpers realisiert werden.

Je nach Adhäsion des Kontaktkörpers kann durch ein Andrücken ein sogenanntes Auflaminieren des Kontaktkörpers auf den Kopieträger realisiert werden. Eine Laminierung beschreibt vorzugsweise ein zumindest zeitweiliges aneinander fügen von Kontaktkörper und Kopieträger. Bspw. kann der Kontaktkörper vor der Belichtung auf den Kopieträger auflaminiert, und nach der Belichtung wieder ablaminiert werden.

So kann vorteilhafterweise ein verbesserter optischer Kontakt realisiert werden.

Gemäß der beanspruchten Erfindung werden durch das Andrücken und/oder das Aneinanderdrücken der Kopieträger und das Masterhologramm sowie der Kopieträger und mindestens eine weitere optische Belichtungskomponente aneinandergedrückt und/oder in Kontakt gebracht.

Bevorzugterweise befindet sich der Kopieträger zwischen dem Kontaktkörper und dem Masterhologramm, sodass ein Andrücken bzw. Aneinanderdrücken des Kontaktkörpers und des Kopieträgers ein Andrücken des Kopieträgers und des Masterhologramms bewirken.

Es kann bevorzugt sein, dass Masterhologramm und Kontaktkörper eingerichtet sind, ein Aneinanderdrücken des Kontaktkörpers und des zwischen Masterhologramm und Kontaktkörper liegenden Kopieträgers und/oder ejn Aneinanderdrücken des Masterhologramms und des zwischen Masterhologramm und Kontaktkörper liegenden Kopieträgers zu bewirken.

Dies kann insbesondere durch eine Relativbewegung von Masterhologramm und Kontaktkörper aufeinander zu realisiert werden, wobei vorzugsweise Masterhologramm und Kopieträger und bevorzugt ebenso Kopieträger und Kontaktkörper in Kontakt gebracht und aneinander gedrückt werden und eine Kraft zwischen diesen ausgeübt wird.

So kann auf einfache Weise ein verbesserter optischer Kontakt zwischen Masterhologramm und Kopieträger und/oder Kopieträger und Kontaktkörper realisiert werden.

Für das in Kontakt bringen der weiteren optischen Belichtungskomponente und des Kopieträgers kann die weitere optische Komponente in der vorstehenden Beschreibung zum in Kontakt bringen des Masterhologramms und des Kopieträgers mutatis mutandis anstelle des Masterhologramms gesetzt werden, wobei die weitere optische Belichtungskomponente auch zusätzlich zum Masterhologramm verwendet werden kann und bspw. auf einer gleichen Seite des Kopieträgers wie das Masterhologramm vorliegt und bspw. ebenfalls eine Relativbewegung wie das Masterhologramm vornehmen kann.

Es kann jedoch ebenso bevorzugt sein, dass die weitere optische Belichtungskomponente vom Kontaktkörper umfasst ist bzw. mit diesem in direktem optischen Kontakt steht. Durch das Aneinanderdrücken von Kontaktkörper und Kopieträger werden somit auch Kopieträger und Kontaktkörper in einen (optischen) Kontakt gebracht.

Dabei kann es bevorzugt sein, sowohl ein Masterhologramm als auch eine weitere optische Belichtungskomponente zu verwenden und durch das vorstehend beschriebene in Kontakt bringen des Masterhologramms mit dem Kopieträger und des Kontaktkörpers mit dem Kopieträger ebenfalls die weitere optische Belichtungskomponente mit dem Kopieträger in Kontakt zu bringen.

Durch das Aneinanderdrücken wird das Masterhologramm und mindestens eine weitere optische Belichtungskomponente in Kontakt gebracht. Dabei kann die weitere optische Belichtungskomponente bspw. auf einer anderen Seite des Masterhologramms als der Kontaktkörper angeordnet sein. Jedoch kann in einigen der vorstehend beschriebenen Beispiele durch die Weitergabe eines Drucks durch das Andrücken auf das Masterhologramm erfolgen, welches wiederum dadurch an die weitere optische Belichtungskomponente angedrückt und mit dieser in Kontakt gebracht wird.

Ein in Kontakt bringen bzw. Aneinanderdrücken des Masterhologramms und der weiteren optischen Belichtungskomponente umfasst vorzugsweise ebenfalls ein Kontakt bringen bzw. Aneinanderdrücken einer das Masterhologramm umfassende Masterplatte mit der weiteren optischen Belichtungskomponente.

Gemäß der beanspruchten Erfindung ist die weitere optische Belichtungskomponenten ausgesucht aus der Gruppe umfassend Umlenkhologramm und/ oder Strahlformungshologramm.

Durch weitere optische Komponenten können bei der Replikation die Lichtstrahlen entsprechend geleitet werden, um das Replikationsverfahren zu realisieren und/oder zu verbessern. Bspw. kann durch eine Strahlfalle verhindert werden, dass aus dem Kopieträger austretende Lichtstrahlen in unerwünschter Weise reflektiert werden und somit im Kopieträger unerwünschte Interferenzen mit den erwünschten Belichtungsstrahlen verursachen. Auch durch die anderen genannten Komponenten kann ein Strahl in für die Replikation gewünschter Weise beeinflusst werden. Bspw. kann durch das Einkoppelprisma Licht für die Replikation zuerst in den Kopieträger eingekoppelt werden und dann nach dem Austritt aus dem Kopieträger in das Masterhologramm eintreten, welches in Reflektion funktioniert und wodurch die vom Masterhologramm reflektierten Strahlen im Kopierträger mit den durch das Einkoppelprisma eingestrahlten Lichtstrahlen zwecks Replikation interferieren. Durch das Prisma können die Strahlen dabei zusätzlich in einem gewünschten Winkel auf den Kopieträger geleitet werden. Dies ist insbesondere für die Herstellung sogenannter Edge-Lit Hologramme vorteilhaft. Ein Auskoppelprisma kann bspw. verwendet werden, um die Lichtstrahlen nach dem Austritt aus dem Kopieträger in geeigneter Weise wegzuleiten. Die weitere optische Belichtungskomponente kann ebenfalls eine Walze sein. Dies ist insbesondere vorteilhaft für einen Replikationsverfahren, welches in einem Rolle-zu-Rollen Verfahren vorgenommen wird und wobei der Kopieträger in Form einer sogenannten "Endlos"-Bahn vorliegt. Eine Laminationswalze kann bspw. verwendet werden, um den Kopieträger zeitweilig auf den Kontaktkörper und/oder das Masterhologramm aufzulaminieren. Eine weitere optische Belichtungskomponente kann ebenfalls eine transparente Walze sein, durch deren Seitenfläche insbesondere Licht der Belichtung eingekoppelt wird, um eine Belichtung des Kopieträgers unter einem gewünschten Winkel vornehmen zu können. Der Strahlengang der Belichtung kann dabei mutatis mutandis analog wie bei dem vorgenannten Einkoppelprisma verlaufen.

In einer weiteren bevorzugten Ausführungsform der Erfindung berühren sich der Kontaktkörper und eine vom Masterhologramm abgewandte Seite des Kopieträgers über innerhalb eines zu belichtenden Bereichs während der Belichtung direkt.

Hierdurch kann ein optischer Kontakt vorteilhafterweise dort hergestellt werden, wo er benötigt wird, nämlich im zu belichtenden Bereich des Kopieträgers.

In einer weiteren bevorzugten Ausführungsform der Erfindung ist der Brechungsindex des Kontaktkörpers an den Brechungsindex des Masterhologramms und/oder den Brechungsindex weiterer optischer Belichtungskomponenten angepasst.

Insbesondere ist der Brechungsindex so angepasst, dass Reflektionen an den Grenzflächen verhindert bzw. vermindert werden können. So können unerwünschte Rückreflektionen in den Kopierträger während des Belichtungsprozesses unterdrückt werden.

In einer weiteren bevorzugten Ausführungsform der Erfindung unterscheiden sich die angepassten Brechungsindizes um weniger als 0,2, bevorzugt um weniger als 0,05 und insbesondere um weniger als 0,01.

So ist eine verbesserte Anpassung möglich.

In einer weiteren bevorzugten Ausführungsform der Erfindung sind die Brechungsindizes des Kontaktköpers, des Kopieträgers, des Masterhologramms und/oder der weiteren Belichtungskomponente so ausgewählt, dass für einen Lichtstrahl des Belichtungslichtes bei einem Durchleuchten von jeweils drei dieser Komponenten der Brechungsindex der als zweites durchleuchteten Komponente zwischen den Brechungsindizes der anderen Komponenten liegt.

Bspw. kann der Brechungsindex des Kopieträgers, welcher zwischen Masterhologramm und Kontaktkörper liegt, zwischen den Brechungsindizes von Kontaktkörper und Masterhologramm liegen. Das mutatis mutandis gleiche kann gelten für einen Kopieträger zwischen Masterhologramm und weiterer Belichtungskomponenten oder für einen Kopieträger zwischen Kontaktkörper und weiterer Belichtungskomponente.

Hierdurch kann eine unerwünschte Reflektion an einer der Grenzflächen zwischen den Komponenten besonders effektiv vermindert werden.

In einer weiteren bevorzugten Ausführungsform der Erfindung ist das frequenzabhängige Elastizitätsmodul (Speichermodul) des Kontaktkörpers mindestens 10 mal so groß, bevorzugt mindestens 100 mal so groß und insbesondere mindestens 1000 mal so groß wie das zugehörige Verlustmodul (innere Reibungsverluste) des Kontaktkörpers.

Der Fachmann weiß, wie er anhand von Tabellenwerten und/oder Messversuchen das Elastizitätsmodul und das Verlustmodul des Kontaktkörpers bestimmen kann.

Hierdurch kann der optische Kontakt besonders stabil realisiert werden.

In einer weiteren bevorzugten Ausführungsform der Erfindung umfasst der Kopieträger ein flächiges Element, insbesondere eine Glasscheibe.

Dies ist insbesondere interessant für die Herstellung eines (zweiten) Masterhologramms aus dem Masterhologramm (sogenannter Masteringprozess), da es für das (zweite) Masterhologramm besonders wünschenswert ist, dass dieses mechanisch stabil ist, um für eine Vielzahl von Replikationsprozessen einsetzbar zu sein und damit dieses lager- und transportfähig ist.

In einer weiteren bevorzugten Ausführungsform der Erfindung umfasst der Kopieträger mindestens eine Folie.

Dass der Kopieträger eine Folie umfasst, insbesondere eine sogenannte "Endlos-Folie" oder "Endlos-Rolle", ist insbesondere für ein Replikationsverfahren interessant, welches als Rolle-zu-Rolle Verfahren realisiert wird.

Das Bahnmaterial (der Kopieträger) wird dabei insbesondere durch die Bandführung durch sogenannte Rollen oder Walzen auf Spannung gehalten.

Es kann sich z.B. um einen PC-Film handeln, bspw. mit 125µm Schichtdicke. Für den Kopieträger kommen vorzugsweise mehrere sog. Folienstacks in Frage. Ein solcher Stack kann bspw. Polycarbonat (PC), Triacetat (TAC), Polyamid (PA) und/oder Polyethylenterephthalat (PET) umfassen. Die Foliendicken der umfassten Folien können in einem Bereich zwischen 50 µm und 300 µm liegen und insbesondere 60 µm, 70 µm, 125 µm und/oder 250 µm betragen.

In einer weiteren bevorzugten Ausführungsform der Erfindung umfasst der Kopieträger ein photosensitives Material.

Dies kann bspw. zwischen zwei Folien oder auf einer Folie vorliegen.

In einer weiteren Ausführungsform der Erfindung umfasst das photosensitive Material ein Photopolymer.

In einer weiteren bevorzugten Ausführungsform der Erfindung erfolgt eine Belichtung des Kopieträgers zumindest teilweise durch den Kontaktköper hindurch.

Wenn während der Belichtung vorteilhafterweise ein optischer Kontakt zwischen Kopieträger und Kontaktkörper besteht, kann so eine unerwünschte Reflexion an der mit dem Kontaktkörper in Kontakt stehenden Grenzfläche des Kopieträgers verhindert werden.

In einer weiteren bevorzugten Ausführungsform der Erfindung umfasst der Kontaktkörper einen Formkörper mit einer konvex geformten Kontaktfläche.

Die Kontaktfläche ist vorzugsweise die Außenfläche des Kontaktkörpers, welche vorgesehen ist, den Kopieträger zumindest bereichsweise zu kontaktieren. Diese Definition gilt vorzugsweise nicht nur für die hier genannte Ausführungsform, sondern für den Kontaktkörper im Allgemeinen.

Eine konvex geformte kann eine besonders vorteilhafte Kontaktierung des Kopieträgers ermöglichen. Insbesondere in Verbindung mit der Ausführungsform des Kontaktkörpers, welcher auf die vorstehend genannte Weise elastisch ist, kann so ein Erstkontakt zwischen Kopieträger und Kontaktkörper an einem Punkt bzw. einer Linie der konvexen Kontaktfläche hergestellt werden. Unter stetiger Erhöhung des Drucks zwischen Kontaktkörper und Kopieträger (vorzugsweise durch ein Aneinanderdrücken von Kontaktkörper und Masterhologramm bzw. weiterer optischer Belichtungskomponenten mit dazwischenliegendem Kopieträger) kann so die Kontaktfläche vorteilhafterweise stetig erhöht werden und unerwünschte Lufteinschlüsse zwischen Kontaktkörper und Kopieträger können vorteilhafterweise vermieden werden.

Die konvexe Kontaktfläche kann vorzugsweise einen Krümmungsradius zwischen 50 mm bis 50.000 mm , bevorzugt zwischen 50 mm bis 5.000 mm, besonders bevorzugt zwischen 50 mm bis 4.000 mm aufweisen.?

Die ungefähren Abmessungen des Kontaktkörpers können vorzugsweise (Höhe x Breite x Tiefe) zwischen 0,01 x 200 x 200 mm3 und 500 x 1000 x 1000 mm3, z. B. bei flächigen Step and repeat Kopierverfahren liegen.0

In einer weiteren bevorzugten Ausführungsform der Erfindung umfasst der Kontaktkörper eine Transport- und/oder Laminationswalze für den Kopieträger.

Hierbei kann es sich vorzugsweise um freilaufende oder angetriebene Laminationswalzen für dessen Transport und/oder das Anlaminieren des Kopieträgers auf den Masterhologrammträger handeln. Diese können gleichzeitig bei der Belichtung durchstrahlt werden und erfüllen somit zusätzlich die hierin beschriebene Funktion.

In einer weiteren bevorzugten Ausführungsform der Erfindung umfasst der Kontaktkörper eine mindestens einseitig adhäsive Folie.

Diese kann vorzugsweise um eine vom Belichtungsstrahl umfasste Fläche mit dem Kopieträger in Kontakt gebracht werden und bspw. zwischen Kopieträger und Masterhologramm angeordnet werden, aber auch (z. B. zusätzlich) auf der vom Masterhologramm abgewandten Seite des Kopieträgers angeordnet sein, um da eine optische Kontaktierung mit einem weiteren Kontaktkörper und/oder einer weiteren Belichtungskomponente zu realisieren.

Vorzugsweise ist die Folie hierzu beidseitig adhäsiv, um eine optische Kontaktierung durch die Adhäsionskräfte zwischen den genannten Komponenten zu ermöglichen.

Es können zwei Kontaktkörper zum Einsatz kommen, wobei der eine Kontaktkörper vorzugsweise die mindestens einseitig adhäsive Folie ist. Dann ist diese Folie vorzugsweise der zweite Kontaktkörper und der andere Kontaktkörper ist vorzugsweise der erste Kontaktkörper.

In einer Ausführungsform kann der Kopieträger selbst den Kontaktkörper im Form einer mindestens einseitig adhäsiven Folie umfassen, dann nämlich, wenn sich auf mindestens einer Seite des Kopieträgers ein bevorzugt vorvernetztes Photopolymer befindet, welches selbst als adhäsiver Film fungiert.

In einer anderen Ausführungsform wird die mindestens einseitig adhäsive Folie bereichsweise und zeitweilig (für die Belichtung) auf den Kopieträger auflaminiert.

In einer weiteren bevorzugten Ausführungsform der Erfindung weist die Folie eine Dicke zwischen 10 µm und 90 µm, bevorzugt von 50 µm auf.

In einer weiteren bevorzugten Ausführungsform der Erfindung weist der Kontaktkörper einen Gehalt an ungebundenen Monomeren und/oder Hilfsadditiven < 0,1 Gew.-% auf.

Dabei handelt es sich vorzugsweise um Bestandteile im Material, die unter Einwirkung von Kraft, Temperatur oder Unterdruck im Material migrieren können, sich an den Materialoberflächen anreichern und angrenzende Kontaktflächen kontaminieren können. Es kann sich bspw. um Hilfsstoffe handeln, die bei der Herstellung des Kontaktkörpers verwendet werden und selbst bei dieser nicht zu 100 % mit Abreagieren können.

In einer weiteren bevorzugten Ausführungsform der Erfindung weist der Kontaktköper eine mechanische Festigkeit zwischen 0,25 und 20 MPa, bevorzugt zwischen 0,5 MPa und 5 MPa auf.

Diese mechanische Festigkeit kann bspw. durch Zugversuche ermittelt werden, wie dem Fachmann bekannt ist.

In einer weiteren bevorzugten Ausführungsform der Erfindung weist der Kontaktkörper eine vernachlässigbare Neigung zur Spannungsdoppelbrechung, auch in größeren Schichtdicken, auf.

Die Spannungsdoppelbrechung hängt vorzugsweise von konkreten Prozessbedingungen wie Drücken und/oder Scherkräften ab. Der Fachmann weiß daher, wie er eine kleine Spannungsdoppelbrechung realisieren kann.

Die Spannungsdoppelbrechung ist vorzugsweise so klein, dass ein maximales Δn zwischen verschiedenen Richtungen kleiner als 10%, vorzugsweise kleiner 5% und insbesondere kleiner 1% ist in Bezug auf das größere der ermittelten Brechungsindizes.

Insbesondere soll die spannungsinduzierte Doppelbrechung kleiner sein als die des Kopieträgers.

In einer weiteren bevorzugten Ausführungsform der Erfindung umfasst der Kontaktkörper ein Material ausgesucht aus der Gruppe RTV Silikone, Epoxide, Acrylate und/oder Polyurethane.

RTV Silikone können bspw. Elastosil RT601 oder Elastosil RT 604 von Wacker

Es kann sich insbesondere um bei Raumtemperatur vernetzende Zweikomponenten Silikonharze handeln.

In einer weiteren bevorzugten Ausführungsform der Erfindung werden der Kontaktkörper und der Kopieträger (bevorzugt durch eine Relativbewegung) für die Belichtung in Kontakt gebracht und nach dem Belichtungsprozess wieder voneinander entfernt. Dies kann im Rahmen einer Replikationsanlage, bspw. mit Hilfe entsprechender Aktoren und/oder einer elektronischen Steuerungseinheit (z. B. Prozessor, Mikroprozessor, integrierte Schaltung) realisiert werden. So kann bspw. eine Belichtungsphase und eine Transportphase des Kopieträgers bei der Replikation realisiert werden.

In einer weiteren bevorzugten Ausführungsform der Erfindung ist die Berührung zwischen dem Kontaktkörper und dem Kopieträger formschlüssig und/oder erfolgt ohne Zwischenraum zwischen dem Kontaktkörper und dem Kopieträger.

So kann der optische Kontakt verbessert werden.

In einer weiteren bevorzugten Ausführungsform der Erfindung erfolgt zum Vermeiden von Lufteinschlüssen an der Berührungsfläche zwischen dem Kontaktkörper und dem Kopieträger das In-Kontakt-bringen des Kontaktkörpers und des Kopieträgers (Relativbewegung) über eine erste, initiale Berührungsfläche, wobei die Berührungsfläche danach stetig bis zum Erreichen einer gewünschten Berührungsfläche vergrößert wird.

So können insbesondere störende Lufteinschlüsse, welche Reflektionen verursachen können, vermieden werden.

In einer weiteren bevorzugten Ausführungsform der Erfindung erfolgt das Andrücken mit einem Druck von 1 - 5 x 10⁶ Pa, bevorzugt 1 - 1x10⁶ Pa und insbesondere 1 - 1x10⁴ Pa.

Diese Drücke haben sich, insbesondere mit der bevorzugten Elastizität des Kontaktkörpers, als besonders vorteilhaft für die Herstellung eines temporären optischen Kontakts erwiesen.

In einer weiteren bevorzugten Ausführungsform der Erfindung ist das Belichtungslicht in einem Wellenlängenbereich von 400 bis 900 nm umfasst.

In einem weiteren Aspekt betrifft die Erfindung eine Belichtungsvorrichtung für ein Replikationsverfahren zur Herstellung einer Hologrammkopie eines Masterhologramms, bevorzugt nach der hierin enthaltenen Beschreibung, umfassend:
- Eine erste Anordnung zur Bereitstellung eines Masterhologramms
- Eine zweite Anordnung zur Bereitstellung eines Kopieträgers, welcher ein photosensitives Material umfasst
- Eine Belichtungsanordnung umfassend eine Lichtquelle für ein Belichtungslicht
- Einen Kontaktkörper, welcher transparent ist für das Belichtungslicht

wobei erste Anordnung, zweite Anordnung, Belichtungsanordnung und bevorzugt der Kontaktkörper eingerichtet sind für eine gleichzeitige Belichtung des Masterhologramms und des Kopieträgers,
wobei der Kontaktkörper und der Kopieträger in Kontakt gebracht werden und sich in einem vom Beleuchtungslicht durchstrahlten Teil, bevorzugt zumindest bereichsweise, während der Belichtung direkt berühren,
wobei der Brechungsindex des Kontaktkörpers an den Kopieträger angepasst ist zur Vermeidung von Reflektionen des Belichtungslichtes, vorzugsweise an Berührungsflächen des Kontaktkörpers und des Kopieträgers.

Dem Fachmann ist ersichtlich, dass Vorteile, Definitionen und Ausführungsformen des erfindungsgemäßen Verfahrens ebenso für die beanspruchte erfindungsgemäße Vorrichtung gelten.

Die erste Anordnung zur Bereitstellung eines Masterhologramms umfasst vorzugsweise ein Masterhologramm bzw. stellt dieser in gewünschter Weise bereit. Dabei kann es sich beispielsweise um eine Haltelement für das Masterhologramm handeln, welches dieses mechanisch stabil und vorzugsweise ortsfest im Raum fixiert. Es kann jedoch auch bevorzugt sein, dass das Haltelement das Masterhologramm translatierbar im Raum gehalten wird, um bspw. Masterhologramm, Kopieträger und/oder Kontaktkörper beim Belichtungsprozess in Kontakt zu bringen bzw. aneinander zu drücken. Dies kann bspw. hydraulisch, pneumatisch, mechanisch und/oder elektromagnetisch realisiert werden.

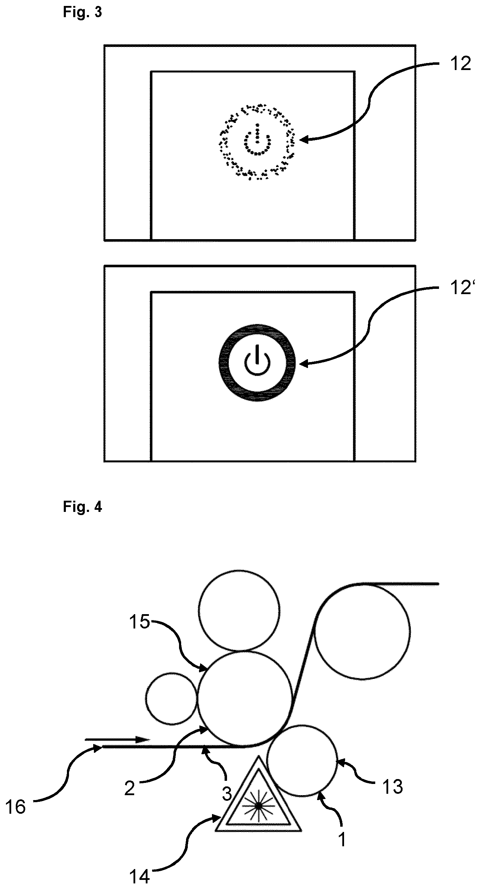

Die erste Anordnung zur Bereitstellung eines Masterhologramms kann vorzugsweise ebenso eine Walze umfassen, welche wiederum das Masterhologramm umfasst, wie bspw. in Fig. 4 gezeigt. Dies kann insbesondere für eine Belichtung in einem Rolle-zu-Rolle-Verfahren vorteilhaft sein. Die Walze kann dabei transparent sein. Das Masterhologramm kann sich dabei auf der Mantelfläche der Walze befinden oder aber etwas beabstandet von der Mantelfläche im Inneren der Walze. Die Walze kann dabei dauerhaft ortsfest gelagert sein. In anderen Beispielen kann die Walze translatierbar gelagert sein, um bspw. Masterhologramm, Kopieträger und/oder Kontaktkörper beim Belichtungsprozess in Kontakt zu bringen bzw. aneinander zu drücken. Dies kann bspw. hydraulisch, pneumatisch, mechanisch und/oder elektromagnetisch realisiert werden.

Eine zweite Anordnung zur Bereitstellung eines Kopieträgers umfasst vorzugsweise einen Kopieträger bzw. stellt diesen in gewünschter Weise bereit. Dabei kann es sich beispielsweise um eine Haltelement für den Kopieträger handeln, welches dieses mechanisch stabil und vorzugsweise ortsfest im Raum fixiert. Es kann jedoch auch bevorzugt sein, dass das Haltelement für den Kopieträger translatierbar im Raum gehalten wird, um bspw. Masterhologramm, Kopieträger und/oder Kontaktkörper beim Belichtungsprozess in Kontakt zu bringen bzw. aneinander zu drücken. Dies kann bspw. hydraulisch, pneumatisch, mechanisch und/oder elektromagnetisch realisiert werden.

Die zweite Anordnung zur Bereitstellung eines Kopieträgers kann vorzugsweise ebenso eine sogenannte "Endlos"-Folie für ein Rolle-zu-Rolle-Verfahren umfassen (s. z. B. Fig. 4), des Weiteren können eine oder mehrere Transportwalzen umfasst sein. Der Kopieträger kann dabei dauerhaft ortsfest gelagert sein. In anderen Beispielen kann der Kopieträger translatierbar gelagert sein, um bspw. Masterhologramm, Kopieträger und/oder Kontaktkörper beim Belichtungsprozess in Kontakt zu bringen bzw. aneinander zu drücken. Dies kann bspw. hydraulisch, pneumatisch, mechanisch und/oder elektromagnetisch realisiert werden, bspw. über eine oder mehrere translatierbar gelagerte Transportwalzen.

Der Kontaktkörper kann dabei ortsfest gelagert bzw. fixiert sein, bspw. durch ein Haltelement für den Kopieträger. Er kann aber ebenso, bspw. durch ein Haltelement für den Kopieträger, translatierbar gelagert sein, bspw. um Kontaktkörper, Kopieträger und/oder Masterhologramm in Kontakt zu bringen bzw. aneinander zu drücken. Dies kann bspw. hydraulisch, pneumatisch, mechanisch und/oder elektromagnetisch realisiert werden.

In einer bevorzugten Ausführungsform der Erfindung sind Kontaktkörper und Kopieträger eingerichtet für eine adhäsive Berührung zwischen einander bzw. untereinander.

In einer weiteren bevorzugten Ausführungsform der Erfindung ist der Kontaktkörper elastisch und weist bevorzugt ein Elastizitätsmodul von weniger als 50 MPa, bevorzugt weniger als 20 MPa und insbesondere weniger als 5 MPa auf.

Gemäß der beanspruchten Erfindung umfasst die Belichtungsvorrichtung eine weitere optische Belichtungskomponente, wobei die weitere optische Belichtungskomponente ausgesucht ist aus der Gruppe umfassend Umlenkhologramm und/oder Strahlformungshologramm.

In einer weiteren bevorzugten Ausführungsform der Erfindung sind zweite Anordnung und Kontaktkörper eingerichtet für ein gegenseitiges Andrücken während der Belichtung, wobei das Andrücken bevorzugt mit einem Druck von 1 - 5 x 10⁶ Pa, bevorzugt 1 - 1x10⁶ Pa und insbesondere 1 - 1x10⁴ Pa erfolgt.

Das Andrücken kann bspw. hydraulisch, pneumatisch, mechanisch und/oder elektromagnetisch realisiert werden.

In einer weiteren bevorzugten Ausführungsform der Erfindung werden durch das Andrücken der Kopieträger und das Masterhologramm sowie bevorzugt der Kopieträger und weitere optische Belichtungskomponenten in Kontakt gebracht.

In einer weiteren bevorzugten Ausführungsform der Erfindung ist das frequenzabhängige Elastizitätsmodul (Speichermodul) des Kontaktkörpers mindestens 10 mal so groß, bevorzugt mindestens 100 mal so groß und insbesondere mindestens 1000 mal so groß ist wie das zugehörige Verlustmodul (innere Reibungsverluste) des Kontaktkörpers.

In einer weiteren bevorzugten Ausführungsform der Erfindung umfasst der Kopieträger ein flächiges Element, insbesondere eine Glasscheibe.

In einer weiteren bevorzugten Ausführungsform der Erfindung umfasst der Kopieträger mindestens eine Folie.

In einer weiteren bevorzugten Ausführungsform der Erfindung umfasst das photosensitive Material ein Photopolymer.

In einer weiteren bevorzugten Ausführungsform der Erfindung umfasst der Kontaktkörper einen Formkörper mit einer konvex geformten Kontaktfläche.

In einer weiteren bevorzugten Ausführungsform der Erfindung sind erste Anordnung, zweite Anordnung, Belichtungsanordnung und Kontaktkörper eingerichtet für eine zumindest teilweise Belichtung des Kopieträgers durch den Kontaktköper hindurch.

In einer weiteren bevorzugten Ausführungsform der Erfindung umfasst der Kontaktkörper eine Transport- und/oder Laminationswalze für den Kopieträger.

Die Walze kann dabei insbesondere Silikon und/oder Glas umfassen. Vorzugsweise kann es sich um eine Walze aus Glas handeln, welche mit einer Silikonschicht, insbesondere im Bereich der Mantelfläche versehen ist, durch die vorteilhafterweise gewünschte mechanische Festigkeiten und Elastizitätsmodule wie hierin beschrieben sowie eine bessere Homogenität erreicht werden kann.

Insbesondere kann die Walze transparent sein. Durch deren Seitenfläche insbesondere Licht der Belichtung eingekoppelt wird, um eine Belichtung des Kopieträgers unter einem gewünschten Winkel vornehmen zu können. Der Strahlengang der Belichtung kann dabei mutatis mutandis analog wie bei dem vorgenannten Einkoppelprisma verlaufen.

In einer weiteren bevorzugten Ausführungsform der Erfindung umfasst der Kontaktkörper eine mindestens einseitig adhäsive Folie.

In einer weiteren bevorzugten Ausführungsform der Erfindung weist die Folie eine Dicke zwischen 10 µm und 90 µm, bevorzugt von 50 µm auf.

In einer weiteren bevorzugten Ausführungsform der Erfindung weist der Kontaktkörper einen Gehalt an ungebundenen Monomeren und/oder Hilfsadditiven < 0,1 Gew.-% auf.

In einer weiteren bevorzugten Ausführungsform der Erfindung weist der Kontaktköper eine mechanische Festigkeit zwischen 0,25 und 20 MPa, bevorzugt zwischen 0,5 MPa und 5 MPa auf.

In einer weiteren bevorzugten Ausführungsform der Erfindung weist der Kontaktkörper eine vernachlässigbare Neigung zur Spannungsdoppelbrechung, auch in größeren Schichtdicken, auf.

In einer weiteren bevorzugten Ausführungsform der Erfindung umfasst der Kontaktkörper ein Material ausgesucht aus der Gruppe RTV Silikone, Epoxide, Acrylate und/oder Polyurethane.

In einer weiteren bevorzugten Ausführungsform der Erfindung sind der Kontaktkörper und die zweite Anordnung eingerichtet für ein In-Kontaktbringen des Kontaktkörpers und des Kopieträgers für die Belichtung und ein gegenseitiges Entfernen nach dem Belichtungsprozess.

In einer weiteren bevorzugten Ausführungsform der Erfindung sind der Kontaktkörper und die zweite Anordnung eingerichtet für eine formschlüssige Berührung zwischen dem Kontaktkörper und dem Kopieträger und/oder eine Berührung ohne Zwischenraum zwischen dem Kontaktkörper und dem Kopieträger.

Dies kann bspw. dadurch realisiert werden, dass Kontaktkörper und/oder Kopieträger translatierbar gelagert sind, wie bereits vorstehend beschrieben wurde. Hierzu kann zur Steuerung eine vorstehend beschriebene Steuereinheit verwendet werden.

In einer weiteren bevorzugten Ausführungsform der Erfindung sind der Kontaktkörper und die zweite Anordnung eingerichtet für das In-Kontakt-bringen des Kontaktkörpers und des Kopieträgers über eine erste, initiale Berührungsfläche und eine darauffolgende stetige Vergrößerung der Kontaktfläche bis zum Erreichen einer gewünschten Berührungsfläche. In einer weiteren bevorzugten Ausführungsform der Erfindung ist die Belichtungsanordnung eingerichtet für die Erzeugung des Belichtungslichtes in einem Wellenlängenbereich von 400 bis 900 nm.

### Beschreibung der Erfindung:

Die Erfindung soll im Folgenden unter Verweis auf weitere Abbildungen und Beispiele erläutert werden. Die Beispiele und Abbildungen dienen der Illustration der Erfindung, ohne diese zu beschränken.
**Figur 1** zeigt zwei Schritte eines Replikationsverfahrens unter Verwendung eines Kontaktkörpers.
**Figur 2** zeigt zwei Schritte eines Replikationsverfahrens unter Verwendung eines Kontaktkörpers.
**Figur 3** zeigt eine vereinfachte Darstellung einer Aufnahme von Bildern durch replizierte Hologramme, wobei eines durch ein Stand-der-Technik Verfahren und eines durch ein erfinderisches Verfahren hergestellt wurde.
**Figur 4** zeigt ein Replikationsverfahren im Rolle-zu-Rolle-Verfahren.
**Figur 5** zeigt ein Replikationsverfahren mit einem Kontaktkörper in Form eines Körpers mit einer konvexen Kontaktfläche.
**Figur 6** zeigt ein Replikationsverfahren mit einem Kontaktkörper in Form einer Folie.

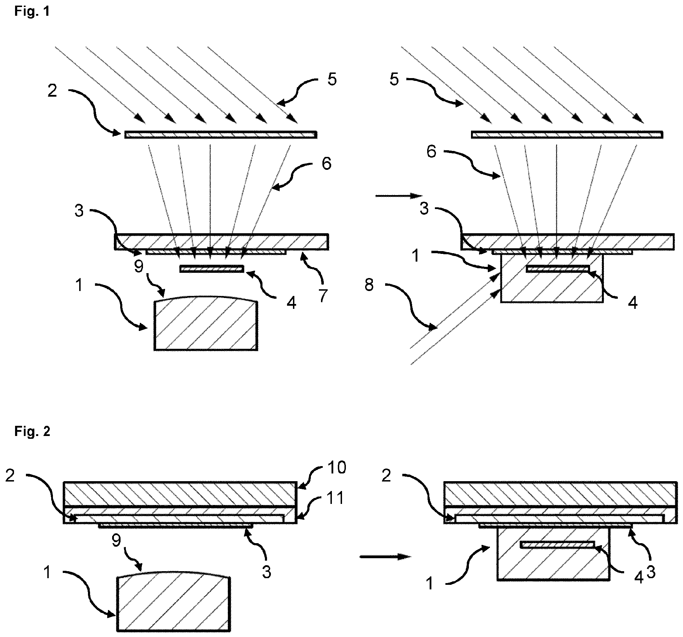

**Figur 1** zeigt zwei Schritte eines Replikationsverfahrens unter Verwendung eines Kontaktkörpers. Eine Belichtungsstrahlung **5** wird zur Rekonstruktion des hier transmissiven Masterhologramms **2** auf dieses gerichtet. Durch die im Masterhologramm **2** gespeicherten Informationen wird ein diese Informationen umfassendes Lichtfeld **6** erzeugt, welches den Kopieträger **3** durchstrahlt. Dieser kann die Glasplatte bzw. ein Trägermaterial **7** umfassen, wobei dann Bezugszeichen **3** vorzugsweise das photosensitive Material kennzeichnet, Bezugszeichen **10** die Glasplatte/das Trägermaterial, wobei beide zusammen vorteilhafterweise den Kopieträger bilden. Alternativ kann die Glasplatte **7** auch zusätzlich zur Einstrahlung des Lichtes in den Kopieträger **3** und/oder zur Halterung des Kopieträgers **3** und/oder als Strahlfalle verwendet werden. Im gezeigten Fall sind die im Masterhologramm gespeicherten Informationen derart, dass ein reelles Bild **4** erzeugt wird. Die Belichtungsstrahlung **5** ist schräg auf das Masterhologramm **2** gerichtet, wobei das Masterhologramm **2** das umgelenkte Lichtfeld **6** erzeugt. Durch den schrägen Lichteinfall der Belichtungsstrahlung **5** und den Abstand zwischen Masterhologramm **2** und Kopieträger **3** kann erreicht werden, dass die nullte (ungebeugte)

Ordnung des Masterhologramms **2** nicht den Kopieträger erreicht und nicht mit dem Lichtfeld **6** interferiert. Ggf. kann die Glasplatte **7** als Strahlfalle für das ungebeugte Licht fungieren, welches durch totale interne Reflektion in dieser weggeleitet wird.

Auf der linken Seite steht der Kontaktkörper **1** nicht in Kontakt mit dem Kopieträger **3.** Es wird kein Referenzstrahl in den Kopieträger **3** geleitet, so dass allein das Lichtfeld **6** dort eintrifft. Es findet demnach keine Interferenz dieses Lichtfeldes **6** mit einem weiteren Feld statt und es könnten somit nicht alle Informationen des Lichtfeldes **6** in den Kopieträger **3** übertragen werden. An der unteren Grenzfläche des Kopieträgers **3** können durch einen Unterschied des Brechungsindex zwischen dem Kopieträger **3** und der Umgebung Reflektionen des Lichtfeldes **6** stattfinden, welche unerwünschte Lichtstrahlen im Kopieträger **3** erzeugen könnten. Ein im linken Bild unterhalb der beschriebenen Anordnung gezeigter elastischer Kontaktkörper **1** mit einer konvexen Kontaktfläche **9** steht nicht im Kontakt mit dem Kopieträger **3.** Der Kontaktkörper **1** weist einen an den Kopieträger **3** angepassten Brechungsindex auf, bspw. einen sehr ähnlichen Brechungsindex, welcher sich um weniger als 0,2 von dem des Kopieträgers **3** unterscheidet. Für eine Belichtung des Kopieträgers **3** ist der Referenzstrahl **8** erforderlich, welche im rechten Bild auf den Kopieträger **3** gerichtet wird. Um die Einstrahlung des Referenzstrahls **8** in den Kopieträger **3** ohne Reflektionen zu ermöglichen und um die oben beschriebenen Reflektionen des Lichtfeldes **6** an der unteren Grenzfläche des Kopieträgers **3** zu verhindern, wird der Kopieträger **3** im rechts gezeigten Bild in Kontakt mit dem Kontaktkörper **1** gebracht. Durch eine Bewegung des Kontaktkörpers **1** hin zum Kopieträger **3** und einem Ausüben einer Kraft zwischen diesen beiden kommt es aufgrund der Elastizität des Kontaktkörpers **1** zu einer Adhäsion zwischen Kontaktkörper **1** und Kopieträger **3.** Darüber hinaus wird die konvexe Kontaktfläche **9** des elastische Kontaktkörpers **1** abgeflacht und ein Luftspalt zwischen Kontaktkörper **1** und Kopieträger **3** wird ohne Lufteinschlüsse geschlossen.

Der Kontaktkörper **1** kann so geformt sein, dass die Referenzstrahlen **8** (welche Teil des Belichtungslichtes sind) über bevorzugt die volle Ausdehnung des Kopieträgers **3** in einem gewünschten Winkel auf diesen durch den Kontaktkörper **1** geleitet werden können, mithin stehen Kontaktkörper **1** und der Kopieträger **3** in einem von einem Belichtungslicht durchstrahlten Teil während der Belichtung in Kontakt.

Wenn die Glasplatte **7** als Strahlfalle fungiert, kann die Glasplatte **7** auch als weitere optische Belichtungskomponente angesehen werden. Durch Aneinanderdrücken von Kontaktkörper 1 und Kopieträger **3** wird der zwischen Kontaktkörper und Glasplatte **7** liegende Kopieträger **3** vorteilhafterweise ebenfalls an die Glasplatte **7** angedrückt und somit ein (optischer) Kontakt zwischen diesen realisiert bzw. verbessert.

**Figur 2** zeigt zwei Schritte eines Replikationsverfahrens unter Verwendung eines Kontaktkörpers **1**. Zur Figur 1 identische Bezugszeichen bezeichnen vorzugsweise die gleichen Komponenten wie in Figur 1. Beim gezeigten Beispiel findet die Belichtung des Kopieträgers **3** vorzugsweise von unten, durch den Kontaktkörper **1** statt. Das Masterhologramm **2** ist in einer Masterplatte **11** angeordnet. Das Masterhologramm **2** ist vorzugsweise ein reflektives Hologramm. Durch Belichtung von unten durch den Kopieträger **3** hindurch reflektiert das Masterhologramm **2** Lichtstrahlen mit den im Masterhologramm **2** enthaltenen Informationen. Diese interferieren mit den von unten kommenden Lichtstrahlen im Kopieträger **3** und erzeugen so dort das replizierte Hologramm. Die Anordnung des Kontaktkörpers **1** und dessen Annäherung an den Kopieträger **3** (hier an die Masterplatte **11** anlaminiert) in der rechten Abbildung ist analog zur Figur 1. Jedoch ist hier oberhalb der Masterplatte 11 eine weitere optische Belichtungskomponente, nämlich eine Strahlfalle **10** angeordnet. Diese soll nicht vom Masterhologramm 2 reflektierte Lichtstrahlen auffangen und eine unerwünschte Rückreflektion oberhalb der Masterplatte **11** verhindern. Daher ist auch an dieser Stelle vorzugsweise ein optischer Kontakt zwischen Masterplatte **11** und Strahlfalle **10** durch einen möglichst angepassten Brechungsindexunterschied zwischen diesen beiden realisiert.

Vorzugsweise wird im gezeigten Beispiel durch das Andrücken Kontaktkörpers **1** an den Kopieträger **3,** der Kopieträger **3** und das Masterhologramm **2** sowie der Kopieträger **3** und die Strahlfalle **11** (über das Masterhologramm **2**) bzw. das Masterhologramm **2** bzw. die Masterplatte **11** mit der Strahlfalle **10** in einen verbesserten Kontakt gebracht werden, bei dem etwaige Lufteinschlüsse zwischen den Komponenten vermindert werden können.

**Figur 3** zeigt eine schematisierte Darstellung von Aufnahmen zweier durch replizierte Hologramme erzeugten Bilder, wobei das obere durch ein Stand-der-Technik Verfahren und das untere durch ein erfinderisches Verfahren hergestellt wurde.

Die erzeugten Bilder **12, 12'** stellen jeweils das bekannte Symbol eines Ein-Aus-Schalters dar.

Das obere Hologramm wurde durch ein Stand der Technik Verfahren repliziert, bei dem ein Kopieträger mit einem Glasblock und dazwischenliegender Flüssigkeit (Glycerin) (optisch) kontaktiert wurde und wobei die Belichtung durch den Glasblock vorgenommen wurde. Es ist zu erkennen, dass das Bild **12** nicht ganz durchgehend abgebildet ist und dadurch weniger scharf und hell erscheint.

Das untere Bild **12'** wurde hingegen durch ein erfinderisches Verfahren erzeugt, bei dem als Kontaktkörper ein Silikonblock verwendet wurde, welcher mit dem Kopieträger in Kontakt gebracht wurde und durch den die Belichtung vorgenommen wurde. Das untere Bild **12'** ist durch die verbesserte optische Kontaktierung homogener, heller und schärfer, was durch die durchgehenden, homogeneren und stärkeren Bildelemente schematisch gut nachvollziehbar dargestellt wurde.

**Figur 4** zeigt ein Replikationsverfahren im Rolle-zu-Rolle-Verfahren. Der Kontaktkörper **1** ist im gezeigten Beispiel die Walze **13.** Hierbei kann es sich bspw. um eine Transport- und/oder Laminationswalze handeln. Die Walze **15** umfasst das Masterhologramm **2.** Die Belichtung findet über die Lichtquelle **14** (z. B. Laser) statt. Der Kopierträger **3** ist in der "Endlos-Folie" **16** umfasst. Die Bewegungsrichtung ist von links nach rechts (durch den Pfeil dargestellt). Ansonsten ist das Masterhologramm **2** im gezeigten Beispiel ein Reflektionshologramm und die Belichtung findet vorzugsweise wie im in der Figur 2 gezeigten Beispiel statt.

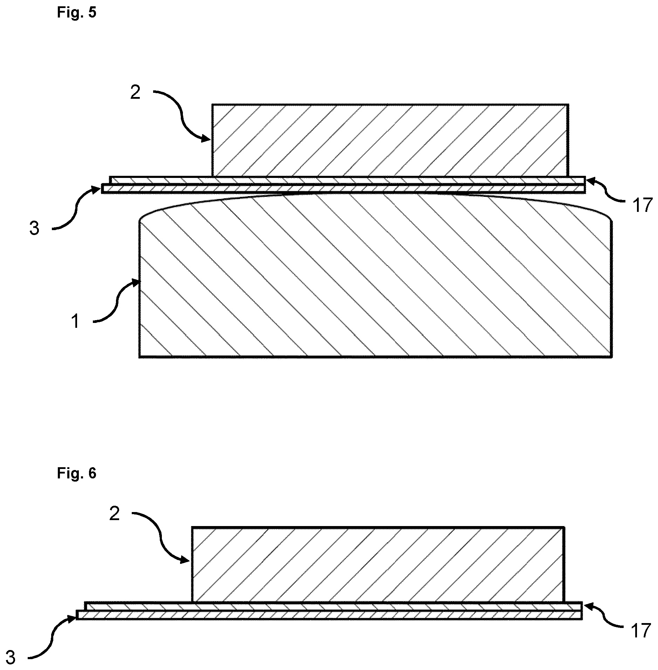

**Figur 5** zeigt ein Replikationsverfahren mit einem Kontaktkörper 1 in Form eines Körpers mit einer konvexen Kontaktfläche **9.** Dies entspricht mutatis mutandis dem in Figur 2 gezeigten Beispiel, wobei hier das Masterhologramm **2** auch ein Transmissionshologramm sein kann und die Belichtung entsprechend gemäß der in der Figur gezeigten Anordnung der Komponenten von oben vorgenommen werden kann. In diesem Ausführungsbeispiel kann das ungebeugte Belichtungslicht (nullte Ordnung des Masterhologramms **2**) mit dem vom Masterhologramm **2** erzeugten Beleuchtungslicht im Kopieträger **3** interferieren und dort das zu replizierende Hologramm erzeugen. Der von unten mit dem Kopieträger **3** in Kontakt stehende und brechzahlangepasste Kontaktkörper **1** kann zum einen durch den optischen Kontakt sicherstellen, dass an der Unterseite des Kopieträgers **3** keine unerwünschten Reflektionen stattfinden. Zum anderen kann durch ein Andrücken des Kontaktkörpers **1** an den Kopieträger **3** ein gleichzeitiges Andrücken des Kopieträgers **3** an das Masterhologramm **2** erfolgen, wodurch zwischen diesen der (optische) Kontakt vorteilhafterweise ebenfalls hergestellt bzw. verbessert wird. Hier ist noch eine weitere "Schicht" **17** gezeichnet, welche optional ist. Diese stellt einen zweiten, flächigen Kontaktkörper, bspw. in Form einer Folie dar, die zwischen Masterhologramm und Kopierträger vorliegt und dort den optischen Kontakt herstellt bzw. verbessert. Ein Andrücken des Kontaktkörpers **1** kann hier ebenfalls den Kontakt verbessern. Dieser zweite Kontaktkörper **17** ist vorzugsweise mindestens einseitig adhäsiv, vorzugsweise durch seine elastischen Eigenschaften und/oder durch eine adhäsive Beschichtung.

**Figur 6** zeigt ein Replikationsverfahren lediglich mit einem flächigen Kontaktkörper in Form einer Folie **17,** welche die optische Kontaktierung zwischen Masterhologramm **2** und Kopieträger **3** verbessert.

### BEZUGSZEICHENLISTE

- 1: Kontaktkörper
- 2: Masterhologramm
- 3: Kopieträger
- 4: Reelles Bild
- 5: Belichtungsstrahlung
- 6: Durch beleuchtetes Masterhologramm erzeugtes Lichtfeld
- 7: Glasscheibe
- 8: Referenzstrahl
- 9: Konvexe Kontaktfläche
- 10: Strahlfalle
- 11: Masterplatte
- 12, 12': Durch replizierte Hologramme erzeugte Bilder
- 13: Walze, welche Kontaktkörper umfasst
- 14: Belichtungsquelle
- 15: Walze, welche Masterhologramm umfasst
- 16: Endlos-Folie
- 17: Flächiger bzw. folienförmiger Kontaktkörper

## Patentansprüche

1. Replikationsverfahren für eine Herstellung einer Hologrammkopie durch eine gleichzeitige Belichtung eines Masterhologramms (2) und eines Kopieträgers (3), welcher ein photosensitives Material umfasst,
wobei ein Kontaktkörper (1) während der Belichtung mit dem Kopieträger (3) in Kontakt gebracht wird,
wobei sich der Kontaktkörper (1) und der Kopieträger (3) in einem von einem Belichtungslicht durchstrahlten Teil während der Belichtung direkt berühren,
wobei der Kontaktkörper (1) transparent ist für das Belichtungslicht und
wobei der Brechungsindex des Kontaktkörpers (1) an den Brechungsindex des Kopieträgers (3) angepasst ist zur Vermeidung von Reflektionen des Belichtungslichtes,
wobei durch ein Andrücken der Kopieträger (3) und das Masterhologramm (2) sowie der Kopieträger (3) und mindestens eine weitere optische Belichtungskomponente aneinandergedrückt und/oder in Kontakt gebracht werden, **dadurch gekennzeichnet, dass** die weitere optische Belichtungskomponente ausgesucht ist aus der Gruppe umfassend Umlenkhologramm und/oder Strahlformungshologramm.

2. Replikationsverfahren nach Anspruch 1,
wobei die bereichsweise Berührung durch eine Adhäsion zwischen Kontaktkörper (1) und Kopieträger (3) unterstützt wird
und/oder
wobei der Kontaktkörper (1) elastisch ist und bevorzugt ein Elastizitätsmodul von weniger als 50 MPa, bevorzugt weniger als 20 MPa und insbesondere weniger als 5 MPa aufweist.
und/oder
wobei der Kontaktkörper (1) elastisch und/oder biegsam ist und Kontaktkörper (1) und Kopieträger (3) während der Belichtung aneinander angedrückt werden.

3. Replikationsverfahren nach einem oder mehreren der vorherigen Ansprüche,
wobei sich der Kontaktkörper (1) und ein überwiegender Teil der vom Masterhologramm (2) abgewandten Seite des Kopieträgers (3) während der Belichtung direkt berühren.

4. Replikationsverfahren nach einem oder mehreren der vorherigen Ansprüche,
wobei der Brechungsindex des Kontaktkörpers (1) darüber hinaus an den Brechungsindex des Masterhologramms (2) und/oder den Brechungsindex weiterer optischer Belichtungskomponenten angepasst ist,
wobei sich die angepassten Brechungsindizes bevorzugt um weniger als 0,2, stärker bevorzugt um weniger als 0,05 und insbesondere um weniger als 0,01 unterscheiden.

5. Replikationsverfahren nach einem oder mehreren der vorherigen Ansprüche,
wobei eine Belichtung des Kopieträgers (3) zumindest teilweise durch den Kontaktköper (1) hindurch erfolgt.

6. Replikationsverfahren nach einem oder mehreren der vorherigen Ansprüche,
wobei der Kontaktkörper (1) einen Formkörper mit einer konvex geformten Kontaktfläche (9) umfasst
und/oder
wobei der Kontaktkörper (1) eine Transport- und/oder Laminationswalze für den Kopieträger (3) umfasst
und/oder
wobei der Kontaktkörper (1) eine mindestens einseitig adhäsive Folie (17) umfasst.

7. Replikationsverfahren nach einem oder mehreren der vorherigen Ansprüche,
wobei der Kontaktkörper (1) und der Kopieträger (3) für die Belichtung in Kontakt gebracht werden und nach dem Belichtungsprozess wieder voneinander entfernt werden
und/oder
wobei die Berührung zwischen dem Kontaktkörper (1) und dem Kopieträger (3) formschlüssig ist und/oder ohne Zwischenraum zwischen dem Kontaktkörper (1) und dem Kopieträger (3) erfolgt.

8. Replikationsverfahren nach einem oder mehreren der vorherigen Ansprüche 1-7,
wobei das Andrücken mit einem Druck von 1 - 5 x 10⁶ Pa, bevorzugt 1 - 1x10⁶ Pa und insbesondere 1 - 1x10⁴ Pa erfolgt.

9. Belichtungsvorrichtung für ein Replikationsverfahren zur Herstellung einer Hologrammkopie eines Masterhologramms (2), bevorzugt nach einem oder mehreren der vorherigen Ansprüche, umfassend:
- Eine erste Anordnung zur Bereitstellung eines Masterhologramms (2)
- Eine zweite Anordnung zur Bereitstellung eines Kopieträgers (3), welcher ein photosensitives Material umfasst
- Eine Belichtungsanordnung umfassend eine Lichtquelle (14) für ein Belichtungslicht
- Einen Kontaktkörper (1), welcher transparent ist für das Belichtungslicht wobei
erste Anordnung, zweite Anordnung, Belichtungsanordnung und bevorzugt Kontaktkörper (1) eingerichtet sind für eine gleichzeitige Belichtung des Masterhologramms (2) und des Kopieträgers (3),
wobei der Kontaktkörper (1) und der Kopieträger (3) in Kontakt gebracht werden und sich in einem vom Beleuchtungslicht durchstrahlten Teil während der Belichtung direkt berühren, wobei der Brechungsindex des Kontaktkörpers (1) an den Kopieträger (3) angepasst ist zur Vermeidung von Reflektionen des Belichtungslichtes,
wobei die Belichtungsvorrichtung eine weitere optische Belichtungskomponente umfasst, **dadurch gekennzeichnet, dass** die weitere optische Belichtungskomponente ausgesucht ist aus der Gruppe umfassend Umlenkhologramm und/oder Strahlformungshologramm.

10. Belichtungsvorrichtung nach dem vorherigen Anspruch 9,
wobei Kontaktkörper (1) und Kopieträger (3) eingerichtet sind für eine adhäsive Berührung zwischen einander
und/oder
wobei der Kontaktkörper (1) elastisch ist und bevorzugt ein Elastizitätsmodul von weniger als 50 MPa, bevorzugt weniger als 20 MPa und insbesondere weniger als 5 MPa aufweist.

11. Belichtungsvorrichtung nach einem der vorherigen Ansprüche 9 oder 10,
wobei zweite Anordnung und Kontaktkörper (1) eingerichtet sind für ein gegenseitiges Andrücken während der Belichtung, wobei das Andrücken bevorzugt mit einem Druck von 1 - 5 x 10⁶ Pa, bevorzugt 1 - 1x10⁶ Pa und insbesondere 1 - 1x10⁴ Pa erfolgt, wobei vorzugsweise durch das Andrücken der Kopieträger (3) und das Masterhologramm (2) sowie bevorzugt der Kopieträger (3) und weitere optische Belichtungskomponenten in Kontakt gebracht werden.

12. Belichtungsvorrichtung nach einem oder mehreren der vorherigen Ansprüche 9-11,
wobei der Kontaktkörper (1) einen Formkörper mit einer konvex geformten Kontaktfläche (9) umfasst.

13. Belichtungsvorrichtung nach einem oder mehreren der vorherigen Ansprüche 9-12, wobei erste Anordnung, zweite Anordnung, Belichtungsanordnung und Kontaktkörper (1) eingerichtet sind für eine zumindest teilweise Belichtung des Kopieträgers (3) durch den Kontaktköper (1) hindurch.

14. Belichtungsvorrichtung nach einem oder mehreren der vorherigen Ansprüche 9-13, wobei der Kontaktkörper (1) eine Transport- und/oder Laminationswalze für den Kopieträger (3) umfasst und/oder
wobei der Kontaktkörper (1) eine mindestens einseitig adhäsive Folie (17) umfasst.

15. Belichtungsvorrichtung nach einem oder mehreren der vorherigen Ansprüche 9-14,
wobei der Kontaktkörper (1) und die zweite Anordnung eingerichtet sind für ein Inkontaktbringen des Kontaktkörpers (1) und des Kopieträgers (3) für die Belichtung und ein gegenseitiges Entfernen nach dem Belichtungsprozess.
und/oder
wobei der Kontaktkörper (1) und die zweite Anordnung eingerichtet sind für eine formschlüssige Berührung zwischen dem Kontaktkörper (1) und dem Kopieträger (3) und/oder eine Berührung ohne Zwischenraum zwischen dem Kontaktkörper (1) und dem Kopieträger (3).

## Claims

1. Replication method for producing a hologram copy by simultaneous exposure of a master hologram (2) and a copy carrier (3) comprising a photosensitive material, wherein a contact body (1) is brought into contact with the copy carrier (3) during the exposure,
wherein, during the exposure, the contact body (1) and the copy carrier (3) are in direct contact with one another in a portion through which an exposure light propagates,
wherein the contact body (1) is transparent to the exposure light and
wherein the refractive index of the contact body (1) is adapted to the refractive index of the copy carrier (3) in order to avoid reflections of the exposure light, wherein a pressing together action leads to the copy carrier (3) and the master hologram (2) and also the copy carrier (3) and at least one further optical exposure component being pressed against one another and/or brought into contact with one another, **characterized in that**
the further optical exposure component is selected from the group comprising deflection hologram and/or beam-shaping hologram.

2. Replication method according to Claim 1,
wherein the localized contact is assisted by adhesion between the contact body (1) and the copy carrier (3) and/or
wherein the contact body (1) is elastic and preferably has a Young's modulus of less than 50 MPa, preferably less than 20 MPa and in particular less than 5 MPa and/or
wherein the contact body (1) is elastic and/or flexible, and the contact body (1) and copy carrier (3) are pressed against one another during the exposure.

3. Replication method according to one or more of the preceding claims,
wherein the contact body (1) and a predominant part of the side of the copy carrier (3) facing away from the master hologram (2) are in direct contact with one another during the exposure.

4. Replication method according to one or more of the preceding claims,
wherein the refractive index of the contact body (1) is furthermore adapted to the refractive index of the master hologram (2) and/or the refractive index of further optical exposure components,
wherein the adapted refractive indices differ preferably by less than 0.2, more preferably by less than 0.05 and in particular by less than 0.01.

5. Replication method according to one or more of the preceding claims,
wherein the copy carrier (3) is exposed at least in part through the contact body (1).

6. Replication method according to one or more of the preceding claims,
wherein the contact body (1) comprises a shaped body having a convexly shaped contact surface (9) and/or
wherein the contact body (1) comprises a transport and/or lamination roller for the copy carrier (3) and/or
wherein the contact body (1) comprises a film (17) that is adhesive at least on one side.

7. Replication method according to one or more of the preceding claims,
wherein the contact body (1) and the copy carrier (3) are brought into contact for the exposure and are removed from one another again after the exposure process
and/or
wherein the contact between the contact body (1) and the copy carrier (3) is form-fitting and/or established without an intervening gap between the contact body (1) and the copy carrier (3).

8. Replication method according to one or more of preceding Claims 1-7,
wherein the pressing together is effected at a pressure of 1-5×10⁶ Pa, preferably 1-1×10⁶ Pa and in particular 1-1×10⁴ Pa.

9. Exposure apparatus for a replication method for producing a hologram copy of a master hologram (2), preferably according to one or more of the preceding claims, comprising:
- a first arrangement for providing a master hologram (2),
- a second arrangement for providing a copy carrier (3) comprising a photosensitive material,
- an exposure arrangement comprising a light source (14) for an exposure light,
- a contact body (1) that is transparent to the exposure light,
wherein the first arrangement, second arrangement, exposure arrangement and preferably the contact body (1) are configured for a simultaneous exposure of the master hologram (2) and the copy carrier (3),
wherein the contact body (1) and the copy carrier (3) are brought into contact and, during the exposure, are in direct contact with one another in a portion through which the exposure light propagates, wherein the refractive index of the contact body (1) is adapted to the copy carrier (3) in order to avoid reflections of the exposure light,
wherein the exposure apparatus comprises a further optical exposure component,
**characterized in that**
the further optical exposure component is selected from the group comprising deflection hologram and/or beam-shaping hologram.

10. Exposure apparatus according to preceding Claim 9,
wherein contact body (1) and copy carrier (3) are configured for adhesive contact between one another and/or
wherein the contact body (1) is elastic and preferably has a Young's modulus of less than 50 MPa, preferably less than 20 MPa and in particular less than 5 MPa

11. Exposure apparatus according to either of preceding Claims 9 and 10,
wherein the second arrangement and the contact body (1) are configured to press against one another during the exposure, wherein the pressing together is preferably effected at a pressure of 1-5×10⁶ Pa, preferably 1-1×10⁶ Pa and in particular 1-1×10⁴ Pa, wherein, preferably, the copy carrier (3) and the master hologram (2) and preferably also the copy carrier (3) and further optical exposure components are brought into contact with one another by the pressing together action.

12. Exposure apparatus according to one or more of preceding Claims 9-11,
wherein the contact body (1) comprises a shaped body having a convexly shaped contact surface (9).

13. Exposure apparatus according to one or more of preceding Claims 9-12, wherein the first arrangement, second arrangement, exposure arrangement and contact body (1) are configured for an at least partial exposure of the copy carrier (3) through the contact body (1).

14. Exposure apparatus according to one or more of preceding Claims 9-13, wherein the contact body (1) comprises a transport and/or lamination roller for the copy carrier (3)
and/or
wherein the contact body (1) comprises a film (17) that is adhesive at least on one side.

15. Exposure apparatus according to one or more of preceding Claims 9-14,
wherein the contact body (1) and the second arrangement are configured for bringing the contact body (1) and the copy carrier (3) into contact for the exposure and for removing these from one another after the exposure process
and/or
wherein the contact body (1) and the second arrangement are configured for a form-fitting contact between the contact body (1) and the copy carrier (3) and/or a contact without an intervening gap between the contact body (1) and the copy carrier (3).

## Revendications

1. Procédé de réplication pour fabriquer une copie d'hologramme en exposant simultanément un hologramme maître (2) et un support de copie (3), qui comprend un matériau photosensible,
un corps de contact (1) étant mis en contact avec le support de copie (3) pendant l'exposition,
le corps de contact (1) et le support de copie (3) se touchant directement dans une partie traversée par une lumière d'exposition pendant l'exposition,
le corps de contact (1) laissant passer la lumière d'exposition et
l'indice de réfraction du corps de contact (1) étant adapté à l'indice de réfraction du support de copie (3) pour éviter des réflexions de la lumière d'exposition, le support de copie (3) et l'hologramme maître (2) ainsi que le support de copie (3) et au moins un autre composant optique d'exposition pouvant être pressés les uns contre les autres et/ou étant mis en contact par pression,
**caractérisé en ce que**
l'autre composant optique d'exposition étant sélectionné dans le groupe comprenant un hologramme de déviation et/ou un hologramme de formation de faisceau.

2. Procédé de réplication selon la revendication 1,
le contact par endroits étant soutenu par une adhérence entre le corps de contact (1) et le support de copie (3)
et/ou
le corps de contact (1) étant élastique et présentant de manière préférée un module d'élasticité inférieur à 50 MPa, de manière préférée inférieur à 20 MPa et en particulier inférieur à 5 MPa
et/ou
le corps de contact (1) étant élastique et/ou flexible et le corps de contact (1) et le support de copie (3) étant pressés l'un contre l'autre pendant l'exposition.

3. Procédé de réplication selon l'une ou plusieurs des revendications précédentes,
le corps de contact (1) et une majorité de la face du support de copie (3) opposée à l'hologramme maître (2) se touchant directement pendant l'exposition.

4. Procédé de réplication selon l'une ou plusieurs des revendications précédentes,
l'indice de réfraction du corps de contact (1) étant par ailleurs adapté à l'indice de réfraction de l'hologramme maître (2) et/ou à l'indice de réfraction d'autres composants optiques d'exposition,
les indices de réfraction adaptés différant de manière préférée de moins de 0,2, de manière davantage préférée de moins de 0,05, en particulier de moins de 0,01.

5. Procédé de réplication selon l'une ou plusieurs des revendications précédentes,
une exposition du support de copie (3) étant effectuée au moins en partie à travers le corps de contact (1).

6. Procédé de réplication selon l'une ou plusieurs des revendications précédentes,
le corps de contact (1) comprenant un corps moulé avec une surface de contact (9) moulée de manière convexe et/ou
le corps de contact (1) comprenant un rouleau de transport et/ou de laminage pour le support de copie (3)
et/ou
le corps de contact (1) comprenant un film (17) adhésif au moins sur une face.

7. Procédé de réplication selon l'une ou plusieurs des revendications précédentes,
le corps de contact (1) et le support de copie (3) étant mis en contact pour l'exposition et étant à nouveau éloignés l'un de l'autre après le processus d'exposition
et/ou
le contact entre le corps de contact (1) et le support de copie (3) étant à complémentarité de forme et/ou étant effectué sans espace intermédiaire entre le corps de contact (1) et le support de copie (3).

8. Procédé de réplication selon l'une ou plusieurs des revendications précédentes 1 à 7,
la pression étant appliquée à une pression de 1 - 5 x 10⁶ Pa, de manière préférée de 1 - 1x10⁶ Pa et en particulier de 1 - 1x10⁴ Pa.

9. Dispositif d'exposition pour un procédé de réplication pour fabriquer une copie d'hologramme d'un hologramme maître (2), de manière préférée selon l'une ou plusieurs des revendications précédentes, comprenant :
- un premier ensemble pour fournir un hologramme maître (2)
- un deuxième ensemble pour fournir un support de copie (3), qui comprend un matériau photosensible
- un ensemble d'exposition comprenant une source de lumière (14) pour une lumière d'exposition
- un corps de contact (1), qui laisse passer la lumière d'exposition
un premier ensemble, un deuxième ensemble, un agencement d'exposition et de manière préférée un corps de contact (1) étant mis au point pour une exposition simultanée de l'hologramme maître (2) et du support de copie (3),
le corps de contact (1) et le support de copie (3) étant mis en contact et se touchant directement dans une partie traversée par la lumière d'exposition pendant l'exposition, l'indice de réfraction du corps de contact (1) étant adapté au support de copie (3) pour éviter des réflexions de la lumière d'exposition, le dispositif d'exposition comprenant un autre composant d'exposition optique,
**caractérisé en ce que**
l'autre composant optique d'exposition étant sélectionné dans le groupe comprenant un hologramme de déviation et/ou un hologramme de formation de faisceau.

10. Dispositif d'exposition selon la revendication précédente 9,
le corps de contact (1) et le support de copie (3) étant mis au point pour un contact adhésif l'un entre l'autre
et/ou
le corps de contact (1) étant élastique et présentant de manière préférée un module d'élasticité inférieur à 50 MPa, de manière préférée inférieur à 20 MPa et en particulier inférieur à 5 MPa

11. Dispositif d'exposition selon l'une des revendications précédentes 9 ou 10,
le deuxième ensemble et le corps de contact (1) étant mis au point pour une pression mutuelle pendant l'exposition, la pression étant appliquée de manière préférée avec une pression de 1 - 5 x 10⁶ Pa, de manière préférée de 1 - 1x10⁶ Pa et en particulier de 1 - 1x10⁴ Pa, de préférence le support de copie (3) et l'hologramme maître (2) ainsi que, de manière préférée, le support de copie (3) et d'autres composants optiques d'exposition étant mis en contact par pression.

12. Dispositif d'exposition selon l'une ou plusieurs des revendications précédentes 9 à 11,
le corps de contact (1) comprenant un corps moulé avec une surface de contact (9) moulée de manière convexe.

13. Dispositif d'exposition selon l'une ou plusieurs des revendications précédentes 9 à 12, le premier ensemble, le deuxième ensemble, l'ensemble d'exposition et le corps de contact (1) étant mis au point pour une exposition au moins partielle du support de copie (3) à travers le corps de contact (1).

14. Dispositif d'exposition selon l'une ou plusieurs des revendications précédentes 9 à 13, le corps de contact (1) étant un rouleau de transport et/ou de laminage pour le support de copie (3)
et/ou
le corps de contact (1) comprenant un film (17) adhésif au moins sur une face.

15. Dispositif d'exposition selon l'une ou plusieurs des revendications précédentes 9 à 14,
le corps de contact (1) et le deuxième ensemble étant mis au point pour une mise en contact le corps de contact (1) et le support de copie (3) pour l'exposition et pour un éloignement mutuel après le processus d'exposition
et/ou
le corps de contact (1) et le deuxième ensemble étant mis au point pour un contact par complémentarité de forme entre le corps de contact (1) et le support de copie (3) et/ou pour un contact sans espace intermédiaire entre le corps de contact (1) et le support de copie (3).
